# EUROPEAN PATENT SPECIFICATION

(11) **EP 3 199 911 B1**
(45) Date of publication and mention of the grant of the patent: **31.10.2018**
(21) Application number: 17151055.5
(22) Date of filing: 11.01.2017
(51) Int. Cl.: G01B 11/25, G03B 21/20, B25J 13/08

(54) **SYSTEM COMPRISING A THREE-DIMENSIONAL MEASURING APPARATUS**
SYSTEM AUFWEISEND EINE DREIDIMENSIONALE MESSVORRICHTUNG
SYSTEME COMPORTANT UN APPAREIL DE MESURE A TROIS DIMENSIONS

(30) Priority: 27.01.2016 JP 2016013726
(43) Date of publication of application: 02.08.2017
(73) Proprietor: Ricoh Company, Ltd., Tokyo 143-8555 (JP)
(72) Inventor: TAKAHASHI, TATSUYA, Tokyo, 143-8555 (JP)
(74) Representative: J A Kemp

(56) References cited:
- EP-A1- 2 869 023
- EP-B1- 0 678 189
- WO-A1-2014/192115
- WO-A1-2014/199485
- JP-A- 2012 215 394
- JP-B1- 6 024 841
- US-A1- 2010 165 301
- US-A1- 2011 157 353
- US-A1- 2011 317 131
- US-A1- 2012 154 577

## Description

### BACKGROUND

### Technical Field

The present invention relates to a system comprising a pattern irradiation apparatus and a three-dimensional measuring apparatus.

### Background Art

Material handling systems including robots can be used to handle target objects (i.e., work objects) loaded on a tray by using the robots, in which the robot is used to transport the target objects to an apparatus at a next stage, and to assemble the target objects into a product. The material handling system may include a three-dimensional measuring apparatus to measure distance to the target objects on the tray, and the material handling system recognizes a position and a posture of the target objects based on a measured result, and handles the target objects. Further, the material handling system may include a pattern irradiation apparatus that irradiates light having a given pattern onto the target objects placed on the tray to enhance the distance measurement precision of the three-dimensional measuring apparatus as disclosed in Japanese Patent Application Publication No. 2013-222056-A1 and Japanese Patent Application Publication No. 2013-257162-A1. EP 2 869 023 A1 discloses a target object picking system that includes an image processing apparatus that includes a projection unit.

US 2012/154577 A1 discloses a three-dimensional measuring system comprising a pattern irradiation apparatus with an illumination optical system suitable for providing uniform luminance incident on a display element.

The precision of distance measurement can be enhanced by irradiating light having higher and equalized luminance intensity to a projection face such as the tray. However, when an output power of the light source is increased, the luminance density of the light is also increased. The light having increased luminance density may cause damage to optical parts such as a lens and others that configure an irradiation unit.

### SUMMARY

The invention is defined in the claims.

As to the present invention, the light having the equalized luminance density can be irradiated on a projection face, and the luminance density of the light irradiated to the irradiation unit can be reduced, with which damage to optical parts can be suppressed, in particular prevented.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1A illustrates a schematic block diagram of a hardware configuration of a system of a first embodiment;
FIG. 1B illustrates a schematic block diagram of a hardware configuration of a three-dimensional measuring apparatus;
FIG. 1C illustrates a schematic block diagram of a hardware configuration of a recognition apparatus;
FIG. ID illustrates a schematic block diagram of a hardware configuration of a robot controller;
FIG. 2 illustrates a schematic cross-sectional view of a hardware configuration of a pattern irradiation apparatus of the first embodiment;
FIGs. 3A, 3B, and 3C illustrate examples of a light path in an internal space in a light tunnel;
FIG. 4 illustrates a partial perspective view of the pattern irradiation apparatus of the first embodiment;
FIG. 5 illustrates a schematic cross-sectional view of a hardware configuration of a pattern irradiation apparatus of a second embodiment;
FIG. 6 illustrates an example of a light path in an internal space of a reflection-type diffuser;
FIG. 7 illustrates an example of a light path when the reflection-type diffuser drops;
FIG. 8 illustrates a schematic cross-sectional view of a hardware configuration of a pattern irradiation apparatus of a third embodiment;
FIG. 9 illustrates an example of a light path in an internal space of a tapered light tunnel;
FIG. 10 illustrates a schematic cross-sectional view of a hardware configuration of a pattern irradiation apparatus of a fourth embodiment;
FIG. 11 illustrates an example arrangement of a first mirror unit and a lens of the fourth embodiment;
FIG. 12A illustrates an example of a light path when one single mirror is disposed;
FIG. 12B illustrates an example of a light path when the first mirror unit is disposed;
FIG. 13 illustrates a schematic cross-sectional view of a hardware configuration of a pattern irradiation apparatus of a fifth embodiment;
FIG. 14 illustrates an example arrangement of a second mirror unit and a cylindrical lens of the fifth embodiment;
FIG. 15 illustrates a schematic cross-sectional view of a hardware configuration of a pattern irradiation apparatus of a sixth embodiment;
FIG. 16 illustrates an example arrangement of a third mirror unit of the sixth embodiment;
FIG. 17 illustrates a schematic cross-sectional view of a hardware configuration of a pattern irradiation apparatus of a seventh embodiment;
FIG. 18 illustrates a schematic cross-sectional view of a hardware configuration of a pattern irradiation apparatus of an eighth embodiment;
FIG. 19 illustrates an example arrangement of a movable transmissive phosphor member and a first driver of the eighth embodiment;
FIG. 20 illustrates a schematic cross-sectional view of a hardware configuration of a pattern irradiation apparatus of a ninth embodiment;
FIG. 21 illustrates is a side view of a reflective phosphor member of the ninth embodiment;
FIG. 22 illustrates a schematic cross-sectional view of a hardware configuration of a pattern irradiation apparatus of a tenth embodiment; and
FIG. 23 illustrates a schematic cross-sectional view of a hardware configuration of a pattern irradiation apparatus of an eleventh embodiment.

The accompanying drawings are intended to depict exemplary embodiments of the present disclosure and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present disclosure. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present disclosure.

In addition, it should be noted that the terminology used herein is for the purpose of describing particular embodiments only and is not intended to be limiting of the present disclosure. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views illustrated in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, a description is given one or more apparatuses or systems of one or more embodiments of the present disclosure.

A description is given of a system 10 of embodiments of this disclosure with reference to the following drawings. For example, the system 10 can be applied as a material handling system.

### (First embodiment)

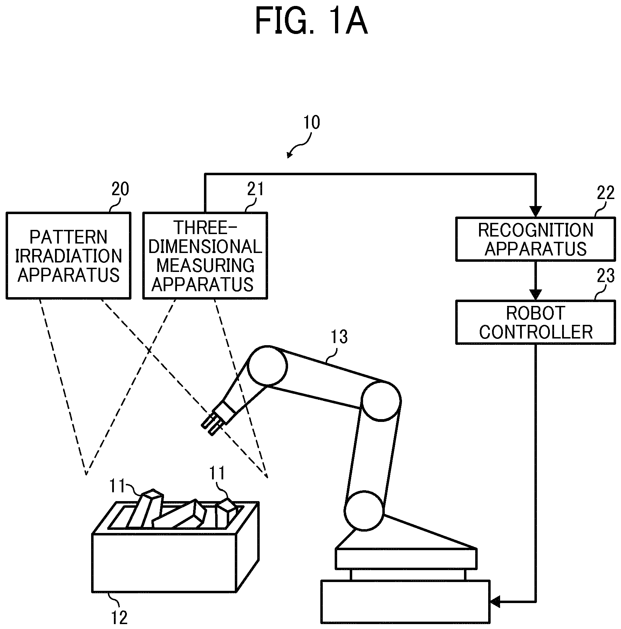

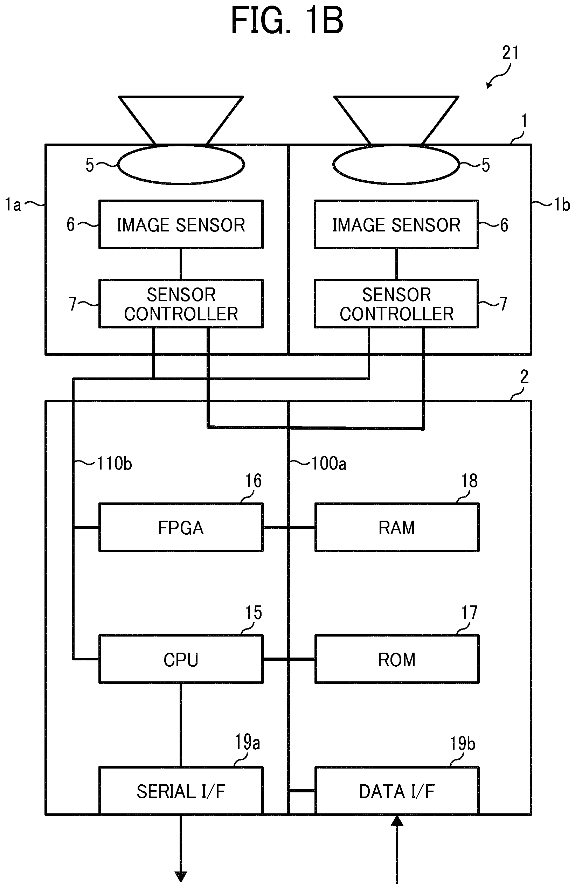

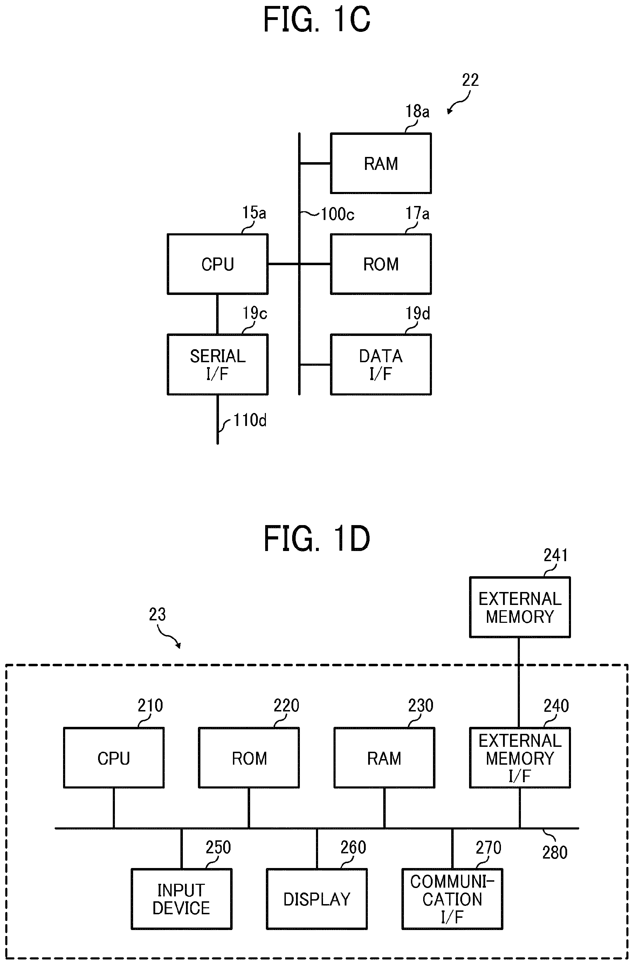

A description is given of the system 10 of a first embodiment with reference to FIG. 1. The system 10 can be used, for example, as a material handling system to handle a target object 11 (i.e., work object), in which the system 10 transports the target object 11 to an apparatus at a next stage, and/or the system 10 assembles a product using the target object 11.

As indicated in FIG. 1A, the system 10 includes, for example, a tray 12, a robot 13, a first pattern irradiation apparatus 20, a three-dimensional measuring apparatus 21, a recognition apparatus 22, and a robot controller 23. The tray 12 is loaded with at least one target object 11.

The robot 13 has an arm to handle the target object 11 loaded on the tray 12. For example, the target object 11 can be moved by using the arm, the target object 11 can be moved by the arm to a given position by using the arm, and the target object 11 can be held with a given posture by the arm. For example, the arm of the robot 13 can include a claw that can be opened and closed, with which the target object 11 can be pinched by the claw, or the robot 13 can employ an air adsorption hand to handle the target object 11, or the robot 13 can employ an electromagnetic unit to handle the target object 11 by using an electromagnetic force. Therefore, the robot 13 performs a handling operation of the target object 11.

The first pattern irradiation apparatus 20 irradiates, for example, a single color light having an image pattern to the tray 12 loaded with the target object 11, with which the light having the image pattern is irradiated onto the exposed external surface of each one of the target objects 11 loaded on the tray 12. As to the first embodiment, the first pattern irradiation apparatus 20 irradiates blue light having an image pattern, but not limited hereto. For example, the first pattern irradiation apparatus 20 can irradiate white light.

When the first pattern irradiation apparatus 20 is irradiating the light having the image pattern, the three-dimensional measuring apparatus 21 measures the distance to the exposed external surface of each one of the target objects 11 loaded on the tray 12. The three-dimensional measuring apparatus 21 employs, for example, a sensor such as a stereo camera to measure the distance to the target object 11 to generate data of the distance to each position in a captured image as three dimensional information.

FIG. 1B is an example of a hardware configuration of the stereo camera, which can be used as the three-dimensional measuring apparatus 21. As indicated in FIG. 1B, the stereo camera includes, for example, a camera unit 1, and an information processing unit 2. The camera unit 1 includes, for example, two cameras such as a first camera 1a for a left side view, and a second camera 1b for a right side view, which are assembled in parallel with each other. Each of the first camera 1a and the second camera 1b includes, for example, a lens 5, an image sensor 6, and a sensor controller 7. The image sensor 6 employs, for example, a charge coupled device (CCD) image sensor, a complementary metal-oxide semiconductor (CMOS) image sensor or the like. The sensor controller 7 controls, for example, exposure of the image sensor 6, image reading, communication with an external circuit, and transmission of image data.

The information processing unit 2 includes, for example, a data bus line 100a, a serial bus line 100b, a central processing unit (CPU) 15, a field-programmable gate array (FPGA) 16, a read only memory (ROM) 17, a random access memory (RAM) 18, a serial interface (I/F) 19a, and a data interface (I/F) 19b. The camera unit 1 is connected or coupled to the information processing unit 2 via the data bus line 100a and the serial bus line 100b. The CPU 15 controls the information processing unit 2 entirely, and the image processing.

The data of luminance image captured by the image sensor 6 of the first camera 1a and the second camera 1b are stored in the RAM 18 of the information processing unit 2 via the data bus line 100a. The CPU 15 and the FPGA16 communicate control data for changing the sensor espousing level, control data for changing the image reading parameter, and various setting data via the serial bus line 100b. The FPGA16 performs, for example, gamma correction, distortion correction such as parallel level of right and left images, and disparity computing by using the block matching to the image data stored in the RAM 18 to generate a disparity image, and stores the disparity image in the RAM 18. The CPU15 controls the sensor controller 7 in the camera unit 1, and the information processing unit 2 entirely. Further, the ROM 17 stores various programs. The CPU 15 acquires data from an external apparatus via the data I/F 19b. Further, the CPU 15 controls various processing for the luminance image and the disparity image stored in the RAM 18 by executing the program stored in the ROM 17.

The recognition apparatus 22 recognizes a position and a posture of each one of the target objects 11 based on the distance to the exposed external surface of each one of the target objects 11 measured by the three-dimensional measuring apparatus 21. The recognition apparatus 22 performs, for example, the matching process such as a matching process with a three-dimensional model or a surface matching process to recognize a position and a posture of each one of the target objects 11. Further, the recognition apparatus 22 can perform an edge extraction based on the intensity of the light received by the image sensor 6 to supplement the matching process.

FIG. 1C is a schematic diagram of the recognition apparatus 22 including, for example, a data bus line 100c, a serial bus line 100d, a CPU 15a , a ROM 17a, a RAM 18a, a serial I/F 19c, and a data I/F 19d. The CPU 15a controls the recognition apparatus 22 entirely, and the recognition process. The ROM 17a stores the recognition process program. The CPU 15a acquires data from an external apparatus via the data I/F 19d. Further, the CPU 15a controls the recognition process for the luminance image and the disparity image stored in the RAM 18a by executing the recognition process program stored in the ROM 17a. The recognition process can be performed by using the disparity image alone, or can be performed by using the disparity image, the luminance image and three-dimensional position information obtained by another apparatus.

The robot controller 23 controls an operation of the robot 13 by performing a preset control flow based on the position and posture of each one of the target objects 11 recognized by the recognition apparatus 22. Specifically, the robot controller 23 controls the robot 13 to perform a handling operation of the target object 11 loaded on the tray 12.

FIG. 1D is an example of a hardware configuration of the robot controller 23. The robot controller 23 includes, for example, a CPU 210, a ROM 220, a RAM 230, an external memory interface (I/F) 240, an input device 250, a display 260, a communication I/F 270, and a system bus 280. The CPU 210 controls the robot controller 23 entirely, and controls each units 220 to 270 via the system bus 280. The ROM 220 is a nonvolatile memory that stores a control program, other programs and data required for the CPU 210 to perform various processing. Further, the control program, other programs and data can be stored in an external memory 241 such as a detachable memory via the external memory I/F 240. The RAM 230 is used as a working memory for the CPU 210. Specifically, the CPU 210 loads programs from the ROM 220 and executes the programs to perform various processing. The external memory 241 stores, for example, various data and various information required for the CPU 210 to perform various processing by using the programs. Further, the external memory 241 stores, for example, various data and various information obtained by performing the various processing by the CPU210. The input device 250 includes, for example, a keyboard and a mouse. An operator can input an instruction and data to the robot controller 23 by using the input device 250. The display 260 includes, for example, a monitor such as a liquid crystal display (LCD). The communication I/F 2700 is an interface used for communication with an external apparatus. The system bus 280 connects the CPU210, the ROM 220, the RAM 230, the external memory I/F 240, the input device 250, the display 260 and the communication I/F 270 to enable the communication between each of the units. The robot controller 23 can perform various capabilities when the CPU 210 executes the programs stored in the ROM 220 and/or the external memory 241. As to the above described configuration, the recognition apparatus 22 and the robot controller 23 are disposed as different apparatuses, but not limited thereto. For example the recognition apparatus 22 and the robot controller 23 can be devised as the same hardware.

As to the system 10, the first pattern irradiation apparatus 20 irradiates the light having the image pattern to each one of the target objects 11 loaded on the tray 12 to enhance the precision of three-dimensional measuring performed by the three-dimensional measuring apparatus 21. With this configuration, the system 10 can recognize the position and posture of each one of the target objects 11 loaded on the tray 12 with enhanced precision, and can handle the target object 11 with enhanced precision.

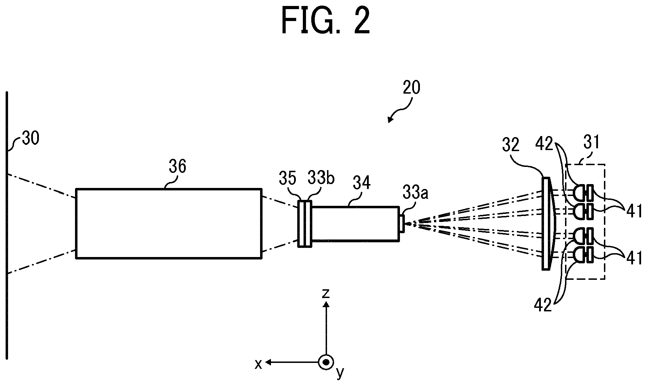

FIG. 2 is a schematic cross-sectional view of a configuration of the first pattern irradiation apparatus 20 of the first embodiment. The first pattern irradiation apparatus 20 irradiates light having an image pattern onto a projection face 30 to enhance the precision of the distance measurement or range finding of the three-dimensional measuring apparatus 21. In this disclosure, the projection face 30 corresponds to the tray 12 where the target object 11 is loaded in the system 10.

As indicated in FIG. 2, the first pattern irradiation apparatus 20 includes, for example, a light source unit 31, a light condenser 32, a first transmission-type diffuser 33a, a second transmission-type diffuser 33b, a light tunnel 34, an image generator 35, and an irradiation unit 36. As to the first transmission-type diffuser 33a and the second transmission-type diffuser 33b, the first transmission-type diffuser 33a is disposed at the upstream of the light tunnel 34 in the x direction, which is an entry side face 45 of the light tunnel 34, and the second transmission-type diffuser 33b is disposed at the downstream of the light tunnel 34 in the x direction, which is an exit side face 46 of the light tunnel 34. In this disclosure, the first transmission-type diffuser 33a is used as a first diffuser or an entry-side diffuser, and the second transmission-type diffuser 33b is used as a second diffuser or an exit-side diffuser. As to the embodiments to be described in this disclosure, each of the first diffuser and the second diffuser may employ a transmission-type diffuser, but not limited thereto. For example, each of the first diffuser and the second diffuser can employ a reflection-type diffuser.

In this disclosure, the light source unit 31, the light condenser 32, the first transmission-type diffuser 33a, the second transmission-type diffuser 33b, and the light tunnel 34 are collectively referred to as an irradiation apparatus, a light modulation apparatus, or a light guiding apparatus while the light source unit 31, the light condenser 32 , the first transmission-type diffuser 33a, the second transmission-type diffuser 33b, the light tunnel 34, the image generator 35, and the irradiation unit 36 are collectively referred to as the pattern irradiation apparatus.

In FIG. 2, the x, y and z indicate directions perpendicular one to another. The x direction indicates a direction parallel to the central axis of the light tunnel 34, which is perpendicular to the y direction and the z direction. The y direction indicates a direction perpendicular to the x direction and the z direction. The z direction indicates a direction perpendicular to the x direction and the y direction.

The light source unit 31 emits light. In this description, the light source unit 31 emits, for example, a plurality of parallel light fluxes such as laser beams into the same direction.

The light source unit 31 includes, for example, a plurality of laser diodes 41, each used as a light source, and a plurality of collimator lenses 42. The plurality of laser diodes 41 emits a plurality of laser beams as coherent light in the same direction. As to the first embodiment, each one of the laser diodes 41 is, for example, a blue laser diode that emits blue laser light having a wavelength range of from 440 nm to 500 nm, but not limited thereto. The laser diode 41 can emit other color light. For example, each one of the laser diodes 41 can emit light other than the visible light if the three-dimensional measuring apparatus 21 can detect the light other than the visible light.

For example, each one of the collimator lenses 42 is disposed for each one of the laser diodes 41 as one to one relationship. When the laser beam emitted from each one of the laser diodes 41 enters each one of the corresponding collimator lenses 42, the laser beams exit from the corresponding collimator lenses 42 as parallel light flux. With this configuration, the light source unit 31 can emit laser beams as a plurality of parallel light fluxes in the same direction.

The light condenser 32 is used to condense the light emitted from the light source unit 31 onto the first transmission-type diffuser 33a. As to the first embodiment, the light condenser 32 is a lens that condenses the plurality of laser beams onto a substantially one point on the first transmission-type diffuser 33a. As disclosed in the following description, the light condenser 32 can be configured with one or more parts.

Each of the first transmission-type diffuser 33a and the second transmission-type diffuser 33b is the transmission-type diffuser that can diffuse the light in the first transmission-type diffuser 33a and the second transmission-type diffuser 33b when the light passes through the first transmission-type diffuser 33a and the second transmission-type diffuser 33b. Each of the first transmission-type diffuser 33a and the second transmission-type diffuser 33b is formed into, for example, a plate, and a random micro convex-concave structure is formed on at least one face of the plate. For example, the transmission-type diffuser diffuses the light with a diffusion angle range of 5 degrees to 10 degrees for the full width at half maximum (FWHM).

When the plurality of laser beams condensed by the light condenser 32 enters the first transmission-type diffuser 33a, the plurality of laser beams passes through the first transmission-type diffuser 33a while diffusing in the first transmission-type diffuser 33a, and then the plurality of laser beam exits from the first transmission-type diffuser 33a and enters the light tunnel 34. When the plurality of laser beams that has passed through the light tunnel 34 enters the second transmission-type diffuser 33b, the plurality of laser beams passes through the second transmission-type diffuser 33b while diffusing in the second transmission-type diffuser 33b, and then the plurality of laser beams exits from the second transmission-type diffuser 33b to the image generator 35.

The light tunnel 34 is an example of an optical equalizer that equalizes a luminance distribution of the light on a face perpendicular to the central axis direction of the optical equalizer, in which the light that passes through. Specifically, the light tunnel 34 equalizes the luminance distribution of the light at the face perpendicular to the central axis direction of the light tunnel 34, which is the face defined by the y direction and the z direction perpendicular to the central axis direction (i.e., x direction) of the light that passes through the light tunnel 34. When the light diffused by the first transmission-type diffuser 33a enters the light tunnel 34, the light tunnel 34 is used to equalize the luminance distribution of the light that passes through the light tunnel 34, and emits the light having the equalized luminance distribution. Then, the light exits from the light tunnel 34, and enters the second transmission-type diffuser 33b, and then the light is further diffused by the second transmission-type diffuser 33b.

The image generator 35 is used to pass and block (or reflect) the light exiting from the light tunnel 34 while applying a given image pattern to generate light having the given image pattern on the face perpendicular to the central axis of the light tunnel 34. The light that has passed through the image generator 35 enters the irradiation unit 36. The given image pattern is, for example, a two dimensional pattern to be irradiated on the target object 11, and the light having the given image pattern is used to enhance the precision of distance measurement.

The image generator 35 is, for example, a photo mask made from a rectangular translucent plate such as glass plate drawn with the given image pattern. Further, the image generator 35 can be formed, for example, as a transmission plate by using transmission-type liquid crystal element that can generate an image pattern by supplying electrical signals, in which the image generator 35 is used to generate the image pattern based on image data acquired from an external apparatus such as an information processing apparatus.

The irradiation unit 36 enlarges the light that has passed through the image generator 35 by applying a magnification ratio, and irradiates the light onto the projection face 30. The irradiation unit 36 includes, for example, one or more lenses.

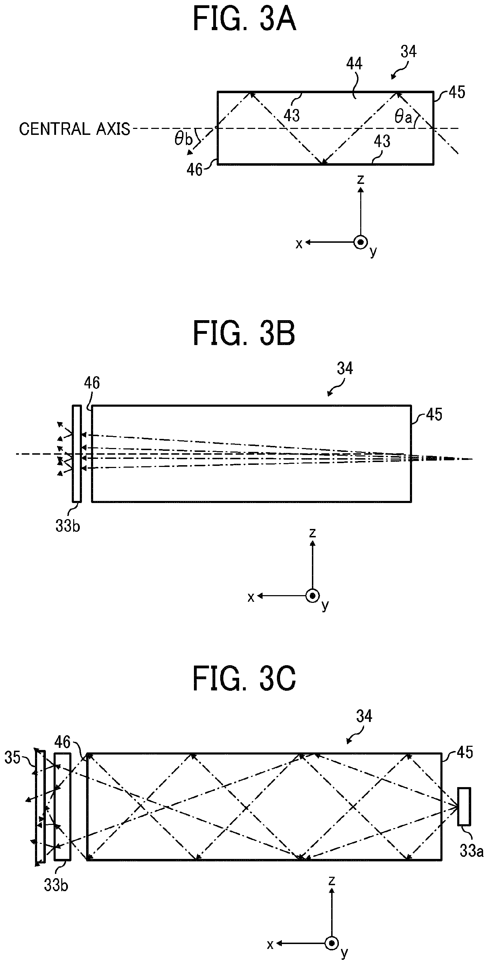

FIG. 3 illustrates an example of a light path in an internal space in the light tunnel 34. As indicated in FIG. 3A, the light tunnel 34 is, for example, a tube or a pipe, and an internal reflection face 43 is formed on an internal face of the light tunnel 34 to reflect the light inside the light tunnel 34 for one or more times. Therefore, the space inside the light tunnel 34 can be used as an internal space 44 where the light passes through or travels. The internal space 44 can be a hollow space, or can be filled with translucent material such as glass that can pass through the light.

As indicated in FIG. 3A, the light tunnel 34 has an entry side face 45 and an exit side face 46. The light diffused by the first transmission-type diffuser 33a enters the internal space 44 of the light tunnel 34 from the entry side face 45. The light that enters the internal space 44 passes through the internal space 44 while reflecting for one or more times on the internal reflection face 43. Then, the light that has passed through the internal space 44 exits from the exit side face 46 of the light tunnel 34 to the outside. Since the light that enters the light tunnel 34 passes through the internal space 44 while reflecting on the internal reflection face 43 for one or more times, the luminance distribution of the light exiting from the light tunnel 34 can be equalized.

Further, the internal reflection face 43 of the light tunnel 34 is set parallel to the central axis of the light tunnel 34. Therefore, an incidence angle θa of the light that enters the light tunnel 34 at the entry side face 45 and an exit angle θb of the light that exits from the light tunnel 34 at the exit side face 46 become the same angle as indicated in FIG. 3A. Therefore, the light can exit from the exit side face 46 of the light tunnel 34 with the same diffusion angle of the first transmission-type diffuser 33a.

By contrast, if the first transmission-type diffuser 33a is not disposed at the entry side face 45 of the light tunnel 34 as indicated in FIG. 3B, the spread angle of light at the entry side face 45 of the light tunnel 34 not disposed with the first transmission-type diffuser 33a (see FIG. 3B) becomes smaller than the spread angle of light at the entry side face 45 of the light tunnel 34 disposed with the first transmission-type diffuser 33a (see FIG. 3A). Therefore, by disposing the first transmission-type diffuser 33a at a position near the entry side face 45 of the light tunnel 34, the diffusion angle at the exit side face 46 of the light tunnel 34 can be set greater as indicated in FIG. 3C. By setting the greater diffusion angle at the entry side face 45 of the light tunnel 34, the equalization of luminance distribution by the light tunnel 34 can be enhanced, to be described later.

Further, as to the first embodiment, a cross-sectional shape of a face of the light tunnel 34 perpendicular to the central axis direction of the light tunnel 34 (i.e., x direction) is, for example, rectangular. The cross-sectional shape of the face of the light tunnel 34 perpendicular to the central axis direction of the light tunnel 34 has an aspect ratio, preferably set with the substantially same as an aspect ratio of the cross-sectional shape of a face of the image generator 35.

Further, the size of the exit side face 46 of the light tunnel 34 is set with a size that the light exiting from the exit side face 46 can hit the entire end side of the image generator 35. If the size of the exit side face 46 of the light tunnel 34 is greater than the size of entire end side of the image generator 35, some of the light exiting from the exit side face 46 does not enter the image generator 35 and becomes useless. Therefore, in view of capability of the assembling precision, the size of the exit side face 46 of the light tunnel 34 and the size of entire end side of the image generator 35 are set with the substantially same size.

Further, the longer the length of the light tunnel 34 along the central axis direction, the greater the number of reflection times in the internal space 44, and thereby the luminance distribution of the light can be further equalized by the light tunnel 34. However, the longer the length of the light tunnel 34along the central axis direction, the greater the loss of the light energy. Therefore, the length of the light tunnel 34 along the central axis direction is set with a minimum value that can equalize the luminance distribution of the light with a given target level.

Further, the light tunnel 34 is also known as optical homogenizer or light pipe. Further, the first pattern irradiation apparatus 20 can employ other optical equalizer instead of the light tunnel 34. For example, the first pattern irradiation apparatus 20 can employ a fly-eye lens instead of the light tunnel 34.

A description is given of an effect of equalizing the luminance distribution by the light tunnel 34, and an effect of the second transmission-type diffuser 33b.

The light that enters the light tunnel 34 has a spread angle of the light. For example, the light that enters the light tunnel 34 with the incidence angle θa as indicated in FIG. 3A. The incidence angle θa becomes different when a different light having different spread angle of light enters the light tunnel 34. The number of reflection times of the light in the light tunnel 34 becomes different for each of the light having different spread angle of light when each of the light having different spread angle of light enters the light tunnel 34. Therefore, as indicated in FIG. 3C, the position of the light on the y-z plane at the exit side face 46 of the light tunnel 34 becomes different when a plurality of light enters the light tunnel 34 with the different incidence angle θa, which means the position of the light on the y-z plane at the exit side face 46 of the light tunnel 34 is determined by the spread angle of the light that enters the light tunnel 34. Therefore, if the spread angle of the plurality of the light that enters the light tunnel 34 becomes broader, the positions of the plurality of light on the y-z plane at the exit side face 46 of the light tunnel 34 become different, and thereby the luminance distribution can be equalized effectively.

Further, as indicated in FIG. 3A, when a single light beam enters the light tunnel 34, the incidence angle θa of the light that enters the light tunnel 34 and the exit angle θb of the light that exits from the light tunnel 34 become the same angle. Therefore, if the light beam having a smaller beam spot enters from the entry side face 45 of the light tunnel 34, the position of the light that exits from the exit side face 46 has a smaller spread angle of the light. In other words, the spread angle of the light that exits from the light tunnel 34 on the y-z plane becomes greater if the light beam having a greater beam spot enters from the entry side face 45 of the light tunnel 34 and if the light beam having various angle components enters from the entry side face 45 of the light tunnel 34.

As to the first embodiment, the incident light to the light tunnel 34 is a laser beam, and a beam spot of the light that enters the entry side face 45 of the light tunnel 34 is smaller than the entry side face 45. In this case, the spread angle of the light that exits from the light tunnel 34 on the y-z plane becomes smaller. Therefore, when the image generator 35 is disposed next to the exit side face 46 the light tunnel 34 (+x direction side), the incidence angle range of the light at the image generator 35 becomes the incidence angle range of the light for the light tunnel 34 or less. Further, since the spread angle of the light in the irradiation unit 36 corresponds to the spread angle of the light that enters the light tunnel 34, the spread angle of the light in the irradiation unit 36 becomes smaller. Therefore, the luminance density of the light traveling in the irradiation unit 36 becomes higher, with which the luminance density of the light hitting each of optical parts becomes higher. If the luminance density of the light in the irradiation unit 36 becomes higher, the optical parts may receive greater energy, which may cause damage to the optical parts.

In view of this issue, the second transmission-type diffuser 33b (i.e., second diffuser) is disposed at a position between the light tunnel 34 and the image generator 35 as indicated in FIGs. 2 and 3C. With this configuration, even if the spread angle of the light that exits from the light tunnel 34 is small, the spread angle of the light that exits from the light tunnel 34 can be set greater by passing through the second transmission-type diffuser 33b. Therefore, the luminance density of the light that hits each of optical parts in the irradiation unit 36 can be reduced, with which the damage of the optical parts can be suppressed, in particular prevented. Further, the laser source having the lower lase class (i.e., lower power) can be used in this configuration. Further, the effect of preventing the damage of optical parts such as a lens in the irradiation unit 36 by disposing the diffuser at the exit side face 46 of the light tunnel 34 can be also attained in other example embodiments.

As described above, by disposing the first transmission-type diffuser 33a at the entry side face 45 of the light tunnel 34, and the second transmission-type diffuser 33b at the exit side face 46 of the light tunnel 34, the spread angle of the light at the entry side face 45 can be set greater, and the beam spot at the entry side face 45 can be set greater, and the diffusion effect of the second transmission-type diffuser 33b can be attained effectively. As to the first embodiment, by disposing the first transmission-type diffuser 33a at the entry side face 45 of the light tunnel 34, and the second transmission-type diffuser 33b at the exit side face 46 of the light tunnel 34, the light having the equalized luminance distribution can be irradiated onto the projection face 30, and the luminance density of the light that enters the irradiation unit 36 can be reduced.

Further, the diffusion angle of the first transmission-type diffuser 33a and the diffusion angle of the second transmission-type diffuser 33b are set with values so that the spread angle of the light that enters the irradiation unit 36 becomes an angle, computed from the numerical aperture (NA) of the irradiation unit 36 at a side of the image generator 35, or less the angle. When the diffusion angle of the first transmission-type diffuser 33a and the diffusion angle of the second transmission-type diffuser 33b are set based on the numerical aperture (NA) of the irradiation unit 36, the light exiting from the image generator 35 can enter the irradiation unit 36 efficiently, and is then guided to the projection face 30. Therefore, the light having the higher power and equalized luminance density can be projected onto the projection face 30.

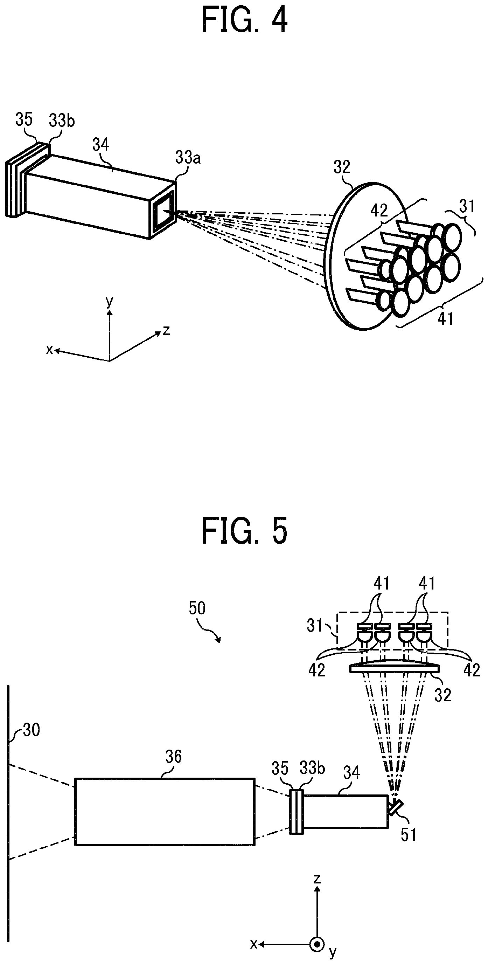

FIG. 4 is a partial perspective view of the first pattern irradiation apparatus 20 of the first embodiment. As indicated in FIG. 4, the light source unit 31 includes, for example, eight laser diodes 41 arranged with a matrix of 2×4, and eight collimator lenses 42 corresponded to each one of the laser diodes 41. The light source unit 31 of FIG. 4 can emit eight parallel light fluxes in the same direction.

Since the light source unit 31 can include the plurality of laser diodes 41, the output light power can be increased. The number of laser diodes 41 and the arrangement of laser diodes 41 in the light source unit 31 can be changed as long as the plurality of laser diodes 41 of the light source unit 31 can emit the laser light in the same direction.

Further, the first transmission-type diffuser 33a can be disposed at a position, for example, right before the light tunnel 34 without disposing an optical relay system. With employing this configuration for the first pattern irradiation apparatus 20, the optical length between the first transmission-type diffuser 33a and the light tunnel 34 be set shorter, and thereby the leak of the diffusion light to the outside of the light tunnel 34 can be prevented. Therefore, the first pattern irradiation apparatus 20 can enhance light transmission efficiency, and can increase the output light power.

Further, the light condenser 32 is used to condense the plurality of laser beams emitted from the light source unit 31 onto the first transmission-type diffuser 33a. Therefore, even if the number of laser diodes 41 in the light source unit 31 is increased, the light emitted from the plurality of laser diodes 41 can be guided inside the light tunnel 34 without losing the light component. Therefore, the first pattern irradiation apparatus 20 can increase the output light power easily.

Typically, the laser beam is high in rectilinearity. Therefore, if the laser beam exiting from the collimator lens 42 enters the light tunnel 34 directly, the equalization of the luminance distribution may not be performed by the light tunnel 34 effectively and efficiently.

As to the first embodiment, since the laser beam diffused by the first transmission-type diffuser 33a enters the light tunnel 34, the equalization of the luminance distribution can be performed by the light tunnel 34 effectively and efficiently. Therefore, as to the first pattern irradiation apparatus 20, the length of the light tunnel 34 along the central axis direction can be set shorter, with which the first pattern irradiation apparatus 20 can be designed compact in size.

Further, the optical length between the light tunnel 34 and the second transmission-type diffuser 33b is preferably set shorter, and the optical length between the second transmission-type diffuser 33b and the image generator 35 is preferably set shorter. With employing this configuration for the first pattern irradiation apparatus 20, the leak of the diffusion light exiting from the light tunnel 34 to the outside of the image generator 35 can be prevented, and the light having the equalized luminance distribution can be guided to the irradiation unit 36 with enhanced efficiency.

Further, the image generator 35 is disposed at a position, for example, right after the light tunnel 34 without disposing an optical relay system. With employing this configuration for the first pattern irradiation apparatus 20, the optical length between the light tunnel 34 and the image generator 35 can be set shorter, and thereby the leak of the diffusion light exiting from the light tunnel 34 to the outside of the image generator 35 can be prevented. Therefore, the first pattern irradiation apparatus 20 can enhance the light transmission efficiency, and can increase the output light power.

Further, as to the first embodiment, each one of the laser diodes 41 emits the blue laser light. With this configuration, the range finding using the first pattern irradiation apparatus 20 can be performed with the enhanced precision, and a working condition preferable for an operator can be provided to be described as below.

For example, a light source P1W, which is a projection-use product of Osram GmbH can be used as the light source. The light source P1W emits the blue light having a brightness of 500 lumen (lm), the red light having a brightness of 1250 lumen (lm), and the green light having a brightness of 4150 lumen (lm). The lumen (lm) is used a unit for the brightness of light flux in view of photopic luminous efficiency function. By contrast, the radiant flux of light having the unit of Watt (W)that does not consider the photopic luminous efficiency function can be calculated by using the equation of "light flux (lm) = 683 × radiant flux (W) × Y stimulus value." The conversion factor (lm/W) can calculated from a representative spectrum of each color, in which the conversion factor (lm/W) of the blue light is calculated as 40 lm/W, the conversion factor (lm/W) of the red light is calculated as 200 lm/W, and the conversion factor (lm/W) of the green light is calculated as 480 lm/W. Therefore, based on the light flux (lm) and conversion factor (lm/W), the radiant flux of the blue light becomes 12.5 W, the radiant flux of the red light becomes 6.3 W, and the radiant flux of the green light becomes 8.6 W. Therefore, the blue light has the highest radiant flux.

Since the first pattern irradiation apparatus 20 irradiates the image pattern used for the range finding, the first pattern irradiation apparatus 20 includes, for example, a light source having a higher radiant flux, which is pure light power and not the light flux (lm) or the photopic luminous efficiency function that is sensitivity of human eyes. For example, the blue laser diode can emit light source having a higher radiant flux. Therefore, since each one of the laser diodes 41 emits the blue laser light, the first pattern irradiation apparatus 20 can irradiate the target object 11 with the higher output light power, and the range finding using the first pattern irradiation apparatus 20 can be performed with the enhanced precision even if the target object 11 is a black colored object.

Further, the blue light has a lower light flux (lm), and does not cause glaring or dazzling to human eyes. Therefore, by using the laser diode 41 that emits the blue laser light, the first pattern irradiation apparatus 20 can provide the working condition preferable for the operator such as a working condition that the operator can easily see the target object 11. Further, the blue light is a visible light. Since each one of the laser diodes 41 emits the blue laser light, the first pattern irradiation apparatus 20 can provide a lighting area where the operator can see the target object 11, and can provide the working condition that the operator can adjust the lighting area.

As above described, as to the first pattern irradiation apparatus 20 of the first embodiment, the higher output light power can be attained and the size and cost of the apparatus can be reduced. Further, the first pattern irradiation apparatus 20 can adjust the working condition for the operator to a preferable condition.

### (Second embodiment)

A description is given of a second pattern irradiation apparatus 50 of a second embodiment with reference to FIG. 5. The second pattern irradiation apparatus 50 of the second embodiment can be applied for the system 10 instead of the first pattern irradiation apparatus 20 of the first embodiment. Further, the pattern irradiation apparatuses of the third embodiment and subsequent embodiments can be applied for the system 10 instead of the first pattern irradiation apparatus 20 of the first embodiment.

Further, the second pattern irradiation apparatus 50 of the second embodiment has some of the same and similar capabilities and configuration of the first pattern irradiation apparatus 20 of the first embodiment. Therefore, the same and similar capabilities and configuration are assigned with the same references, and the same and similar capabilities and configuration are not described in detail while the differences are described.

FIG. 5 is a schematic cross-sectional view of a configuration of the second pattern irradiation apparatus 50 of the second embodiment. The second pattern irradiation apparatus 50 includes, for example, the light source unit 31, the light condenser 32, a reflection-type diffuser 51, the light tunnel 34, the image generator 35, and the irradiation unit 36. The second pattern irradiation apparatus 50 includes the reflection-type diffuser 51 as the first diffuser, which is different from the first embodiment using the first transmission-type diffuser 33a.

The light condenser 32 is used to condense the light emitted from light source unit 31 onto the reflection-type diffuser 51. As to the second embodiment, the light condenser 32 is used to condense the plurality of laser beams at a substantially one point on the reflection-type diffuser 51.

The reflection-type diffuser 51 is used as the first diffuser that diffuses the light that enters the reflection-type diffuser 51. When the plurality of laser beams condensed by the light condenser 32 enters the reflection-type diffuser 51, the plurality of laser beams reflects in the reflection-type diffuser 51 while diffusing in the reflection-type diffuser 51, and then the plurality of laser beams exits from reflection-type diffuser 51, and enters the light tunnel 34. The reflection-type diffuser 51 is used to diffuse the light by reflecting the light in the reflection-type diffuser 51, which is different from the first transmission-type diffuser 33a, but other capabilities and effect of the reflection-type diffuser 51 are same as the first transmission-type diffuser 33a.

The light diffused by the reflection-type diffuser 51 enters the light tunnel 34, and then the light having the equalized luminance distribution exits from the light tunnel 34.

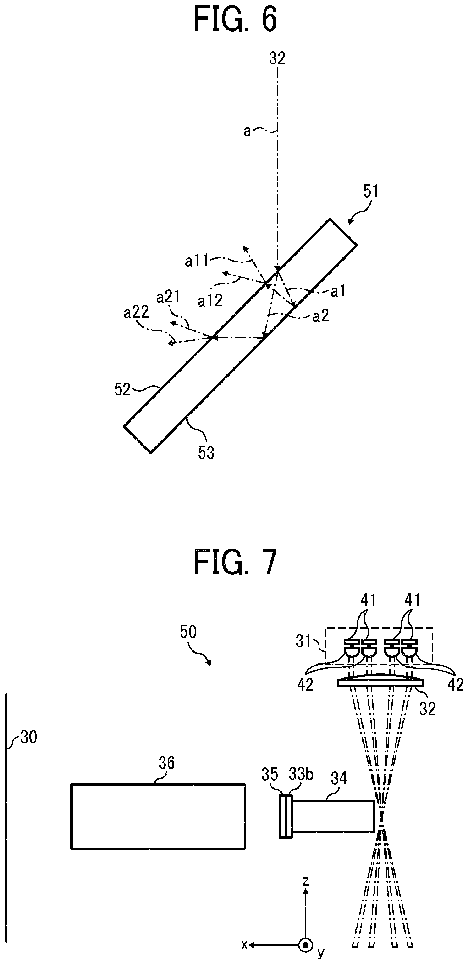

FIG. 6 illustrates an example of a light path in an internal space of the reflection-type diffuser 51. The reflection-type diffuser 51 can be formed, for example, as a plate, and the reflection-type diffuser 51 includes, for example, a transmissive diffusion face 52 and a reflection face 53. As illustrated in FIG. 6 the transmissive diffusion face 52 is formed at one side of the reflection-type diffuser 51 facing the light condenser 32, and the reflection face 53 is formed at an opposite side of the reflection-type diffuser 51 not facing the light condenser 32.

Further, a random micro convex-concave structure is formed on the transmissive diffusion face 52. The transmissive diffusion face 52 passes through the light and diffuses the light. A reflection prevention layer can be formed on the transmissive diffusion face 52. With this configuration, the transmittance of the transmissive diffusion face 52 can be increased.

The reflection face 53 reflects the light that has passed through the transmissive diffusion face 52. The reflection face 53 is, for example, a plane face that does not diffuse the light. A reflection material coating layer such as dielectric multilayer or metal layer can be formed on the reflection face 53. With this configuration, the reflectance of the reflection face 53 can be increased. Then, the light that has reflected on the reflection face 53 passes through the transmissive diffusion face 52 again, and enters the light tunnel 34.

As indicated in FIG. 6, it is assumed that light flux "a" enters the reflection-type diffuser 51 from the light condenser 32. In this example case, the light flux "a" enters the reflection-type diffuser 51 from the outer side of the transmissive diffusion face 52. Then, the light flux "a" passes and diffuses at the transmissive diffusion face 52, and becomes diffused light fluxes "a1" and "a2." FIG. 6 indicates two diffused light fluxes "a1" and "a2," but other diffused light fluxes may occur to the light flux "a."

Then, the diffused light fluxes "a1" and "a2" reflects on the reflection face 53, and enters the inner side of the transmissive diffusion face 52. Then, each of the diffused light fluxes "a1" and "a2" passes and diffuses at the transmissive diffusion face 52, and becomes diffused light fluxes "a11," "a12," "a21," and "a22." FIG. 6 indicates four diffused light fluxes "a11" "a12," "a21," and "a22," but other diffused light fluxes may occur to the diffused light fluxes "a1" and "a2."

As indicated in FIG. 6, the light can be diffused for two times at the transmissive diffusion face 52 of the reflection-type diffuser 51. With this configuration, the diffusion effect of the reflection-type diffuser 51 can be increased, and the light having the further equalized luminance distribution can be emitted. Therefore, as to the second pattern irradiation apparatus 50 of the second embodiment, the image pattern having the further equalized luminance distribution can be irradiated onto the target object 11.

As to the second embodiment, the transmissive diffusion face 52 is formed at the side of the reflection-type diffuser 51 facing the light condenser 32, but not limited thereto. For example, the side of the reflection-type diffuser 51 facing the light condenser 32 can be formed as a reflective diffusion face that can diffuse and reflect the light.

As above described, since the second pattern irradiation apparatus 50 of the second embodiment includes the reflection-type diffuser 51, the light having further equalized luminance distribution can be output.

FIG. 7 illustrates an example of a light path when the reflection-type diffuser 51 drops from a given set position. As to the second pattern irradiation apparatus 50 of the second embodiment, in a case that the reflection-type diffuser 51 drops or be damaged due to the malfunction, the laser beam is not reflected by the reflection-type diffuser 51. In this configuration, the laser beam emitted from the light source unit 31 does not enter the light tunnel 34 as indicated in FIG. 7. Therefore, the second pattern irradiation apparatus 50 does not irradiate the light onto the projection face 30.

With this configuration, when the reflection-type diffuser 51 drops or is damaged, the second pattern irradiation apparatus 50 does not output the laser beam to the external space. With this configuration, the second pattern irradiation apparatus 50 can devise a light exit prevention system of the laser beam when the reflection-type diffuser 51 drops or is damaged with a simpler configuration.

### (Third embodiment)

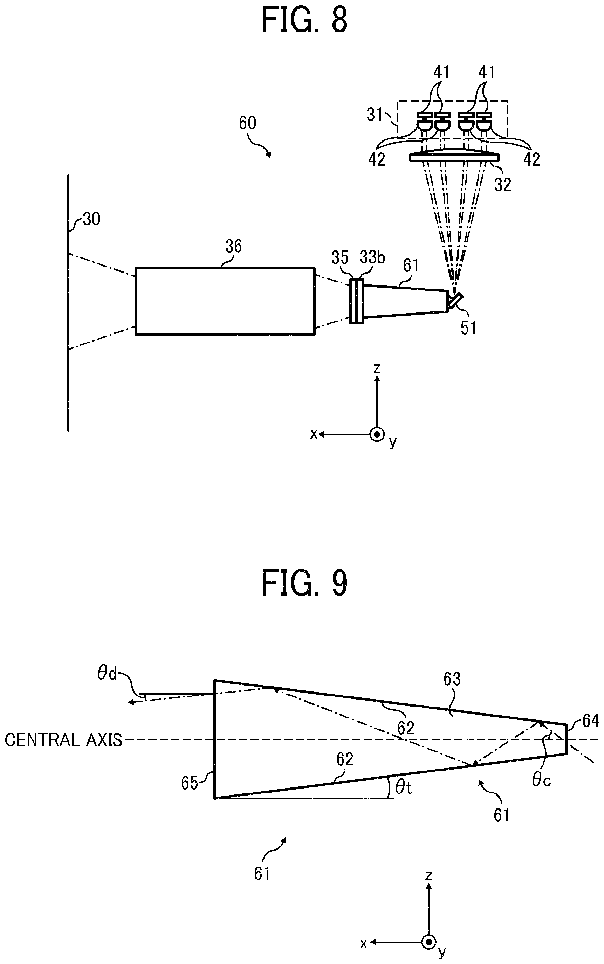

A description is given of a third pattern irradiation apparatus 60 of a third embodiment with reference to FIG. 8. The third pattern irradiation apparatus 60 of the third embodiment has some of the same and similar capabilities and configuration of the second pattern irradiation apparatus 50 of the second embodiment. Therefore, the same and similar capabilities and configuration are assigned with the same references, and the same and similar capabilities and configuration are not described in detail while the differences are described.

FIG. 8 is a schematic cross-sectional view of a configuration of the third pattern irradiation apparatus 60 of the third embodiment. The third pattern irradiation apparatus 60 includes, for example, the light source unit 31, the light condenser 32, the reflection-type diffuser 51, a tapered light tunnel 61, the image generator 35, and the irradiation unit 36. The third pattern irradiation apparatus 60 includes the tapered light tunnel 61 as the optical equalizer, which is different from the second embodiment using the light tunnel 34.

The light diffused by the reflection-type diffuser 51 enters the tapered light tunnel 61, and then the light having the equalized luminance distribution exits from the tapered light tunnel 61. Although the shape of the tapered light tunnel 61 and the shape of the light tunnel 34 have different shapes, the tapered light tunnel 61 has some of the same and similar configuration and capabilities of the light tunnel 34.

FIG. 9 illustrates an example of a light path in an internal space of the tapered light tunnel 61 having an entry side face 64 and an exit side face 65. As indicated in FIG. 9, the exit side face 65 of the tapered light tunnel 61 is set greater in dimension than the entry side face 64 of the tapered light tunnel 61, and an internal reflection face 62 is not parallel to the central axis of the tapered light tunnel 61, which means the internal reflection face 62 is angled or slanted with respect to the central axis of the tapered light tunnel 61, which is different from the light tunnel 34. Further, as to the tapered light tunnel 61, a cross-sectional shape of a face of the tapered light tunnel 61 perpendicular to the central axis direction of the tapered light tunnel 61 such as a cross-sectional shape of the entry side face 64 and a cross-sectional shape of the exit side face 65 can be, for example, a rectangular shape having an aspect ratio, preferably set with the substantially same as an aspect ratio of a cross-sectional shape of a face of the image generator 35.

Similar to the light tunnel 34, the light that has entered the tapered light tunnel 61 passes through an internal space 63 while reflecting for one or more times on the internal reflection face 62, with which the luminance distribution of the light exiting from the tapered light tunnel 61 can be equalized.

As indicted in FIG. 9, the internal reflection face 62 is angled or slanted in the z direction with respect to the central axis of the tapered light tunnel 61 with an angle θt. Therefore, the exit angle θd of the light that exits from the tapered light tunnel 61 is set smaller than the incidence angle θc of the light that enters the tapered light tunnel 61. Therefore, the tapered light tunnel 61 can set a smaller diffusion angle for the light that enters the image generator 35 after the tapered light tunnel 61.

With employing this configuration for the third pattern irradiation apparatus 60 including the tapered light tunnel 61, the incident angle of the light that enters the irradiation unit 36 after the light passes through the image generator 35 can be set smaller, which means that the numerical aperture (NA) can be set smaller. Therefore, as to the third pattern irradiation apparatus 60, the light acquiring efficiency by the irradiation unit 36 can be enhanced, and the higher output light power can be attained.

As to the tapered light tunnel 61, the exit angle θd of the light that exits from the tapered light tunnel 61 can be set smaller by increasing the angle θt indicating the inclination of the internal reflection face 62. Specifically, the angle θt indicating the inclination of the internal reflection face 62 can be increased by settling the entry side face 64 smaller or by settling the exit side face 65 greater. However, if the entry side face 64 is set too small, the light reflected by the reflection-type diffuser 51 may not be acquired efficiently by the tapered light tunnel 61, and if the exit side face 65 is set too great, the light that does not enter the face of the image generator 35 becomes useless. Therefore, the angle θt indicating the inclination of the internal reflection face 62, the size of the entry side face 64, and the size of the exit side face 65 are set in view of these factors.

Further, as to the tapered light tunnel 61, if the length of the tapered light tunnel 61 along the central axis direction is set longer under a condition that the size of the entry side face 64 and the size of the exit side face 65 are set with fixed values, the number of reflection times in the tapered light tunnel 61 can be increased, with which the luminance distribution of the light can be further equalized. However, if the length of the tapered light tunnel 61 along the central axis direction is set longer, the light transmission efficiency decreases due to the increased number of reflection times, and further the angle θt indicating the inclination of the internal reflection face 62 becomes smaller, with which the light acquiring efficiency by the irradiation unit 36 decreases. Therefore, the length of the tapered light tunnel 61 along the central axis direction is set in view of in view of these factors.

As above described, as to the third pattern irradiation apparatus 60 of the third embodiment including the tapered light tunnel 61, the higher output light power can be attained.

### (Fourth embodiment)

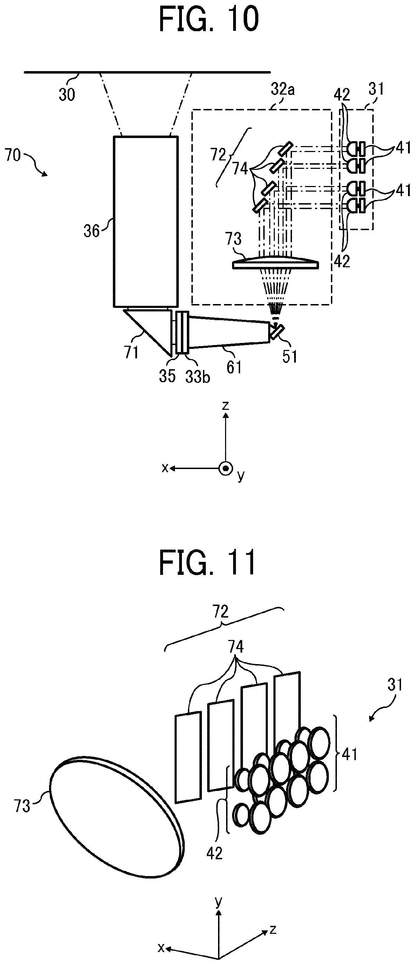

A description is given of a fourth pattern irradiation apparatus 70 of a fourth embodiment with reference to FIG. 10. The fourth pattern irradiation apparatus 70 of the fourth embodiment has some of the same and similar capabilities and configuration of the third pattern irradiation apparatus 60 of the third embodiment. Therefore, the same and similar capabilities and configuration are assigned with the same references, and the same and similar capabilities and configuration are not described in detail while the differences are described.

FIG. 10 is a schematic cross-sectional view of a configuration of the fourth pattern irradiation apparatus 70 of the fourth embodiment. The fourth pattern irradiation apparatus 70 includes, for example, the light source unit 31, a light condenser 32a, the reflection-type diffuser 51, the tapered light tunnel 61, the image generator 35, a prism 71, and the irradiation unit 36. The light condenser 32a includes, for example, a first mirror unit 72 and a lens 73.

The fourth pattern irradiation apparatus 70 includes the prism 71, which is different from the third embodiment. Further, as to the fourth pattern irradiation apparatus 70, the light condenser 32a includes the first mirror unit 72 and the lens 73, which is different from the third embodiment.

The first mirror unit 72 reflects the plurality of parallel light fluxes emitted from the light source unit 31 in the same direction to the lens 73. The first mirror unit 72 includes, for example, a plurality of mirrors 74. Each one of the mirrors 74 reflects the laser beams emitted from the plurality of laser diodes 41 and set as the parallel light fluxes by the collimator lens 42 to the lens 73. The plurality of mirrors 74 reflects the plurality of parallel light fluxes in the same direction, which means that the plurality of mirrors 74 reflects the plurality of light fluxes in parallel.

The lens 73 is used to condense the plurality of parallel light fluxes onto a substantially one point on the reflection-type diffuser 51.

As indicated in FIG. 10, the prism 71 is disposed at a position between the image generator 35 and the irradiation unit 36. As to the fourth embodiment, the irradiation unit 36 is disposed at a given position so that the light axis of the light that enters the irradiation unit 36 is set perpendicular with respect to the central axis of the tapered light tunnel 61. In this configuration, the prism 71 is used to reflect the light exiting from the image generator 35 to the irradiation unit 36. Since the fourth pattern irradiation apparatus 70 includes the prism 71 disposed at the position indicated in FIG. 10, the components of the fourth pattern irradiation apparatus 70 can be disposed in a smaller space. Further, the fourth pattern irradiation apparatus 70 can employ, for example, a mirror instead of the prism 71.

If the prism 71 is not disposed between the image generator 35 and the irradiation unit 36, the length from the tapered light tunnel 61 to the image generator 35 becomes longer, and the light loss becomes greater, in which a lens unit can be used to condense the light instead of the prism 71, but the number of parts increases. Therefore, as to the fourth pattern irradiation apparatus 70 of the fourth embodiment including the prism 71 is disposed between the image generator 35 and the irradiation unit 36, with which the light acquiring efficiency can be maintained at a higher level while the fourth pattern irradiation apparatus 70 can be designed compact in size.

FIG. 11 illustrates an example arrangement of the first mirror unit 72 and the lens 73 of the fourth embodiment. As to the fourth embodiment, the light source unit 31 includes, for example, eight laser diodes 41 arranged with a matrix of 2×4, and eight collimator lenses 42 corresponded to each one of the laser diodes 41.

Further, as to the fourth embodiment, the first mirror unit 72 includes, for example, four mirrors 74. Each one of the four mirrors 74 extends into the y direction, and each one of the four mirrors 74 is disposed for the two laser diodes 41 and the two collimator lenses 42. Each one of the mirrors 74 reflects two parallel light fluxes exiting from the corresponding two collimator lenses 42.

Further, the first mirror unit 72 can include, for example, eight mirrors 74. In this configuration, each one of the mirrors 74 reflects a parallel light flux exiting from each one of the collimator lenses 42.

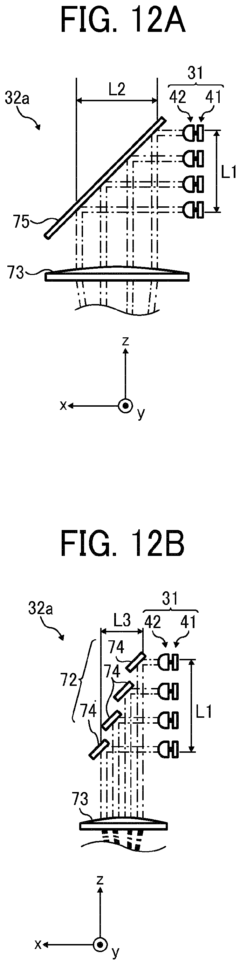

FIG. 12A illustrates an example of a light path when one single mirror 75 is disposed, and FIG. 12B illustrates an example of alight path when the first mirror unit 72 is disposed.

If the fourth pattern irradiation apparatus 70 includes the one single mirror 75 (see FIG. 12A) instead of the first mirror unit 72, the one single mirror 75 is disposed with an angle of 45 degrees with respect to the plurality of parallel light fluxes emitted from the light source unit 31. Therefore, the one single mirror 75 can reflect the parallel light fluxes emitted from the light source unit 31 along one direction into another direction, which is changed for 90 degrees from the one direction.

When a light flux width of the plurality of parallel light fluxes emitted from the light source unit 31 is referred to the light flux width L1, and a light flux width of the plurality of parallel light fluxes that enters to the lens 73 from the one single mirror 75 is referred to the light flux width L2, the light flux width L1 and light flux width L2 becomes the same width.

By contrast, as indicated in FIG. 12B, each one of the mirrors 74 in the first mirror unit 72 is disposed with an angle of 45 degrees with respect to the plurality of parallel light fluxes emitted from the light source unit 31. Therefore, each one of the mirrors 74 can reflect the parallel light flux emitted from the light source unit 31 along one direction into another direction, which is changed 90 degrees from the one direction.

The plurality of mirrors 74 reflects each one of the plurality of parallel light fluxes emitted from the light source unit 31 to the lens 73 while setting a smaller light flux width for the plurality of parallel light fluxes emitted from the light source unit 31 in the same direction. Therefore, when a light flux width of the plurality of parallel light fluxes that enters to the lens 73 from the plurality of mirrors 74 is referred to the light flux width L3, the light flux width L3 becomes smaller than the light flux width L1.

With this configuration, the light flux width of the light that enters the lens 73 is set smaller by the first mirror unit 72 as indicated in FIG. 12B, and thereby the fourth pattern irradiation apparatus 70 can employ the lens 73 having a smaller size. Further, since the light flux width of the light that enters the lens 73 is set smaller in the fourth pattern irradiation apparatus 70, the incident angle of the light that is condensed on the reflection-type diffuser 51 can be set smaller, and thereby the diffusion angle of light flux exiting from the tapered light tunnel 61 can be set smaller. With employing this configuration for the fourth pattern irradiation apparatus 70, the numerical aperture (NA) of the irradiation unit 36 can be set smaller, and the light acquiring efficiency by the irradiation unit 36 can be enhanced.

As to the above described fourth pattern irradiation apparatus 70 of the fourth embodiment, the prism 71 and the first mirror unit 72 are used to change the direction of light with a given angle, with which the fourth pattern irradiation apparatus 70 can be designed compact in size, and further, the higher output light power can be attained by setting the light flux width smaller.

### (Fifth embodiment)

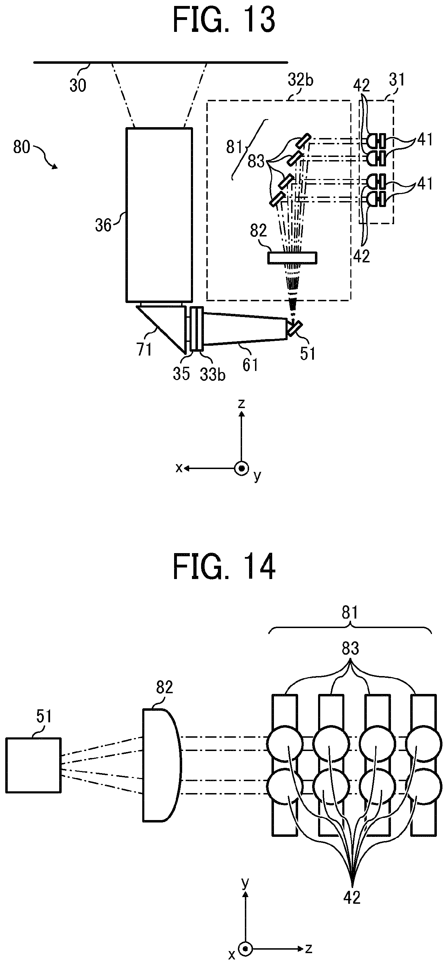

A description is given of a fifth pattern irradiation apparatus 80 of a fifth embodiment with reference to FIG. 13. The fifth pattern irradiation apparatus 80 of the fifth embodiment has some of the same and similar capabilities and configuration of the fourth pattern irradiation apparatus 70 of the fourth embodiment. Therefore, the same and similar capabilities and configuration are assigned with the same references, and the same and similar capabilities and configuration are not described in detail while the differences are described.

FIG. 13 is a schematic cross-sectional view of a configuration of the fifth pattern irradiation apparatus 80 of the fifth embodiment. As to the fifth embodiment, the light condenser 32b includes, for example, a second mirror unit 81 and a cylindrical lens 82. As to the fifth pattern irradiation apparatus 80, the light condenser 32b includes the second mirror unit 81 and the cylindrical lens 82, which is different from the fourth embodiment.

The second mirror unit 81 reflects the plurality of parallel light fluxes emitted from the light source unit 31 in the same direction to the reflection-type diffuser 51. The second mirror unit 81 includes, for example, a plurality of mirrors 83. Each one of the mirrors 83 reflects the laser beam, emitted from each one of the laser diodes 41 and set as the parallel light flux by the collimator lens 42, to the reflection-type diffuser 51.

In this configuration, the plurality of mirrors 83 condenses the plurality of parallel light fluxes to a first direction perpendicular to the light axis of the plurality of light fluxes emitted from the light source unit 31 by disposing the plurality of mirrors 83 with an angle with respect to the light axis of the plurality of light fluxes emitted from the light source unit 31. Hereinafter, the angle of the plurality of mirrors 83 with respect to the light axis of the plurality of light fluxes emitted from the light source unit 31 is referred to as the reflection angle. As to the fifth embodiment, the reflection angle of each one of the plurality of mirrors 83 is set with a value so that the x-direction component of the plurality of parallel light fluxes are irradiated onto a substantially one point on the reflection-type diffuser 51. Therefore, as to the second mirror unit 81, the reflection angle of each one of the plurality of mirrors 83 in the first direction is set with different values to guide the plurality of parallel light fluxes are irradiated onto the substantially one point on the reflection-type diffuser 51.

The cylindrical lens 82 is disposed at a position between the second mirror unit 81 and the reflection-type diffuser 51. The cylindrical lens 82 condenses the plurality of parallel light fluxes reflected by the second mirror unit 81 to the reflection-type diffuser 51 into a second direction perpendicular to the light axis of the plurality of light fluxes emitted from the light source unit 31 and also perpendicular to the first direction.

FIG. 14 illustrates an example arrangement of the second mirror unit 81 and the cylindrical lens 82 of the fifth embodiment. As to the fifth embodiment, the light source unit 31 includes, for example, eight laser diodes 41 arranged with a matrix of 2×4, and eight collimator lenses 42, and each one of the eight collimator lenses 42 are corresponded to each one of the eight laser diodes 41.

Further, as to the fifth embodiment, the second mirror unit 81 includes, for example, four mirrors 83. Each one of the four mirrors 83extends into the y direction, and each one of the four mirrors 73 is disposed for the two laser diodes 41 and the two collimator lenses 42. Each one of the mirrors 83 reflects two parallel light fluxes exiting from the corresponding two collimator lenses 42.

Further, the second mirror unit 81 can include, for example, eight mirrors 83. In this configuration, each one of the mirrors 83 reflects a parallel light flux exiting from each one of collimator lenses 42.

The cylindrical lens 82 condenses the plurality of parallel light fluxes reflected by the second mirror unit 81 to the reflection-type diffuser 51 into the second direction perpendicular to the light axis of the plurality of light fluxes emitted from the light source unit 31 and also perpendicular to the first direction. As to the fifth embodiment, the cylindrical lens 82 condenses the y-direction component of the plurality of parallel light fluxes to irradiate the plurality of parallel light fluxes onto a substantially one point on the reflection-type diffuser 51.

As to the fifth pattern irradiation apparatus 80, the light is condensed in the first direction (e.g., x direction) by setting the reflection angle of each one of the mirrors 83 differently, in which the condensing effect of the lens is not used. Therefore, as to the fifth pattern irradiation apparatus 80, the light flux width of the light that enters the cylindrical lens 82 becomes smaller, and thereby the lens diameter of the cylindrical lens 82 can be set smaller. Further, as to the fifth pattern irradiation apparatus 80, since the lens diameter of the cylindrical lens 82 can be set smaller, the curvature radius of the cylindrical lens 82 can be set smaller while securing the edge thickness that can be manufactured. Therefore, as to the fifth pattern irradiation apparatus 80, the length from the cylindrical lens 82 to the reflection-type diffuser 51 can be set shorter, with which the fifth pattern irradiation apparatus 80 can be compact in size.

Further, instead of the cylindrical lens 82, the fifth pattern irradiation apparatus 80 can include a toroidal lens having one curvature radius in the first direction (e.g., x direction) and another curvature radius in the second direction (e.g., y direction), which are different with each other. In this configuration, the reflection angle of the second mirror unit 81 is set with a value so that the first direction component of the plurality of parallel light fluxes are irradiated onto the substantially one point on the reflection-type diffuser 51 with a light condensing effect in the first direction by the toroidal lens.

### (Sixth embodiment)

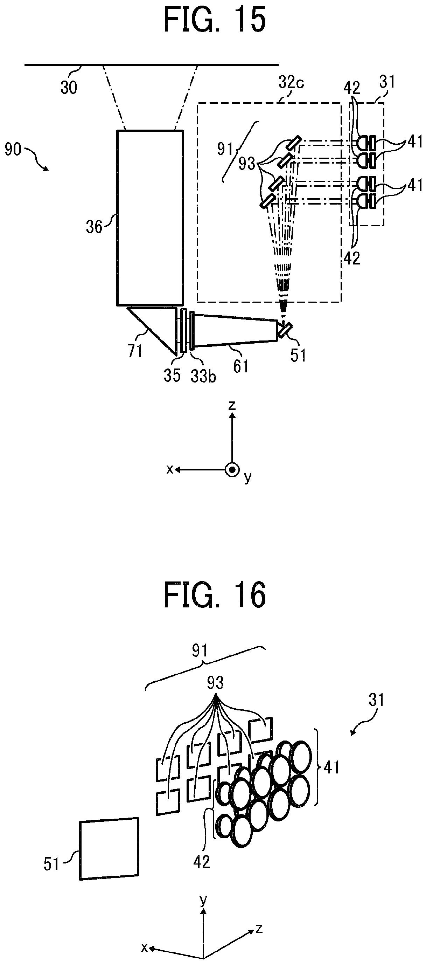

A description is given of a sixth pattern irradiation apparatus 90 of a sixth embodiment with reference to FIG. 15. The sixth pattern irradiation apparatus 90 of the sixth embodiment has some of the same and similar capabilities and configuration of the fourth pattern irradiation apparatus 70 of the fourth embodiment. Therefore, the same and similar capabilities and configuration are assigned with the same references, and the same and similar capabilities and configuration are not described in detail while the differences are described.

FIG. 15 is a schematic cross-sectional view of a configuration of the sixth pattern irradiation apparatus 90 of the sixth embodiment. As to the sixth embodiment, the light condenser 32c includes, for example, a third mirror unit 91. As to the sixth pattern irradiation apparatus 90, the light condenser 32c includes the third mirror unit 91, which is different from the fourth embodiment.

The third mirror unit 91 reflects the plurality of parallel light fluxes emitted from the light source unit 31 in the same direction that is to the reflection-type diffuser 51. The third mirror unit 91 includes, for example, a plurality of mirrors 93. Each one of the mirrors 93 reflects the laser beam emitted from each one of the plurality of laser diodes 41, and the laser beams are set as the parallel light fluxes by the collimator lens 42 and directed to the reflection-type diffuser 51. Each one of the mirrors 93 reflects the laser beams emitted from the plurality of laser diodes 41 and set as the parallel light fluxes by the collimator lens 42 to the reflection-type diffuser 51.

In this configuration, the reflection angle of each one of the plurality of mirrors 93 is set with a value to condense the plurality of parallel light fluxes. As to the sixth embodiment, the reflection angle of each one of the plurality of mirrors 93 is set with a value so that the plurality of parallel light fluxes are irradiated onto a substantially one point on the reflection-type diffuser 51. Therefore, as to the third mirror unit 91, the reflection angle of each one of the plurality of mirrors 93 is set with different values.

FIG. 16 illustrates an example arrangement of the third mirror unit 91 of the sixth embodiment. As to the sixth embodiment, the light source unit 31 includes, for example, eight laser diodes 41 arranged with a matrix of 2×4, and eight collimator lenses 42 corresponded to each one of the laser diodes 41.

Further, as to the sixth embodiment, the third mirror unit 91 includes, for example, eight mirrors 93. Each one of the eight mirrors 93 is disposed for each one of the corresponding laser diodes 41 and corresponding collimator lenses 42, in which each one of the mirrors 93 reflects one parallel light flux exiting from the corresponding one collimator lens 42. Specifically, the reflection angle of each one of the mirrors 93 is adjusted with a value so that the reflected parallel light fluxes are condensed onto the substantially one point on the reflection-type diffuser 51.

As to the sixth pattern irradiation apparatus 90, the third mirror unit 91 is used to condense the light fluxes on the reflection-type diffuser 51. Therefore, the sixth pattern irradiation apparatus 90 does not include a lens to condense the light fluxes on the reflection-type diffuser 51, with which the sixth pattern irradiation apparatus 90 can be designed simpler. Further, if the lens is used to condense the light fluxes, the length from the lens to the reflection-type diffuser 51 has a limit in view of the lower limit of focal length. By contrast, as to the sixth pattern irradiation apparatus 90, the light fluxes can be condensed by adjusting the inclination of the mirrors 93 of the third mirror unit 91, and thereby the limit of the length associated to the lens is not relevant, and thereby the sixth pattern irradiation apparatus 90 can be designed compact in size.

### (Seventh embodiment)

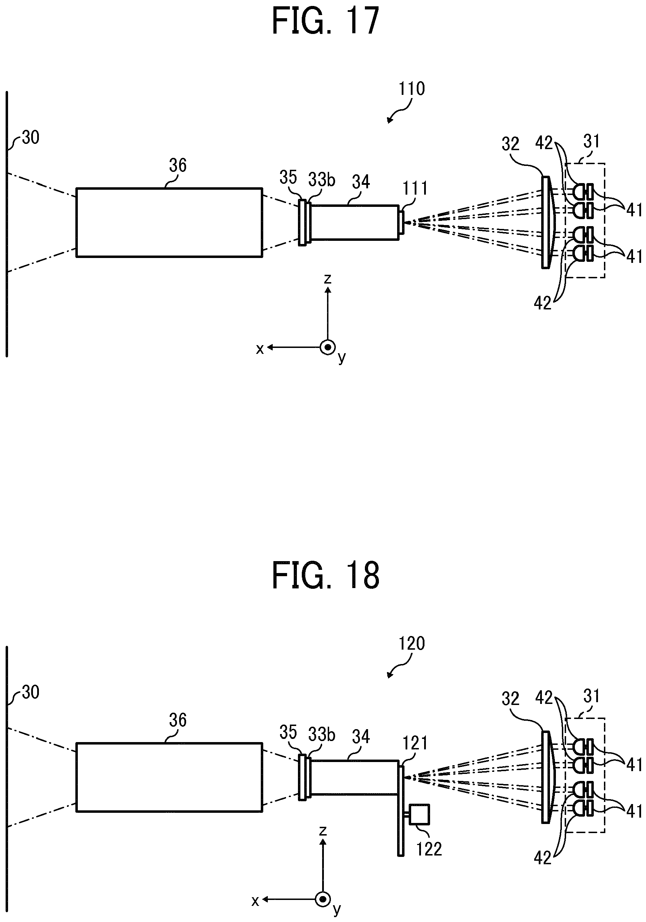

A description is given of a seventh pattern irradiation apparatus 110 of a seventh embodiment with reference to FIG. 17. The seventh pattern irradiation apparatus 110 of the seventh embodiment has some of the same and similar capabilities and configuration of the first pattern irradiation apparatus 20 of the first embodiment. Therefore, the same and similar capabilities and configuration are assigned with the same references, and the same and similar capabilities and configuration are not described in detail while the differences are described.

FIG. 17 is a schematic cross-sectional view of a configuration of the seventh pattern irradiation apparatus 110 of the seventh embodiment. The seventh pattern irradiation apparatus 110 includes, for example, the light source unit 31, the light condenser 32, a transmissive phosphor member 111, the light tunnel 34, the second transmission-type diffuser 33b, the image generator 35, and the irradiation unit 36. The seventh pattern irradiation apparatus 110 includes the transmissive phosphor member 111, which is different from the first embodiment using the first transmission-type diffuser 33a.

The light condenser 32 is used to condense the light emitted from light source unit 31 on the transmissive phosphor member 111. As to the seventh embodiment, the light condenser 32 is used to condense the plurality of laser beams onto a substantially one point on the transmissive phosphor member 111.

The transmissive phosphor member 111, used as the first diffuser, is a transmissive phosphor member that emits fluorescence by using the light that enters the transmissive phosphor member 111 as the excitation light. When the plurality of laser beams condensed by the light condenser 32 enters the transmissive phosphor member 111, the transmissive phosphor member 111 emits the fluorescence by using the light that enters the transmissive phosphor member 111 as the excitation light. The emitted fluorescence exits from the transmissive phosphor member 111 to the light tunnel 34 disposed at a position opposite to the light condenser 32 with respect to the transmissive phosphor member 111. The transmissive phosphor member 111, used as the first diffuser, is a transmission-type diffuser.

When the fluorescence emitted by the transmissive phosphor member 111 enters the light tunnel 34, the fluorescence light having the equalized luminance distribution exits from the light tunnel 34. The exit angle of the light exiting from the light tunnel 34 can be the same as the exit angle of fluorescence emitted from the transmissive phosphor member 111.

The transmissive phosphor member 111 includes, for example, a transmissive base such as a glass plate, and a fluorescent substance disposed on the transmissive base. With employing this configuration for the transmissive phosphor member 111, the fluorescence can exit from one face of the transmissive phosphor member 111, which is the opposite to another face of the transmissive phosphor member 111 where the excitation light enters.

Further, the transmissive phosphor member 111 can be, for example, phosphor ceramics. The phosphor ceramics is a sintered body, which is formed by shaping the fluorescent substance into any shape (e.g., thin plate) and heating the fluorescent substance. Further, the transmissive phosphor member 111 is not limited to the above configuration. The transmissive phosphor member 111 can be formed into any configuration that can emit the fluorescence by using the light emitted from the light source unit 31 as the excitation light, and emits the fluorescence from a face, which is the opposite to the face where the excitation light enters.

As to the seventh embodiment, the light source unit 31 emits a blue laser light, and the transmissive phosphor member 111 uses the blue laser light as the excitation light to emit yellow light. The laser diode that emits the blue laser light can emit the blue laser light with a higher power and can be manufactured less expensively. Therefore, by using the blue laser light emitted from the light source unit 31, the seventh pattern irradiation apparatus 110 can irradiate the higher output light power onto the target object 11 with the less expensive configuration. Therefore, the seventh pattern irradiation apparatus 110 can perform the range finding with the enhanced precision with the less expensive configuration even if the target object 11 is a black colored object.

Further, the light emitted from the light source unit 31 is not limited to the blue light, but other light having other wavelength range (e.g., ultraviolet light, light other than visible light) can be emitted from the light source unit 31. Further, the fluorescence emitted by the transmissive phosphor member 111 is not limited to the yellow light, but other light having other wavelength range (e.g., red light, green light, blue light, white light) can be emitted as the fluorescence.

Further, the transmissive phosphor member 111 uses coherent light as the excitation light, and emits incoherent light as the fluorescence. Therefore, the transmissive phosphor member 111 can emit light having the equalized luminance distribution not having speckle noise, which means the transmissive phosphor member 111 can be used to diffuse the light. With this configuration, as to the seventh pattern irradiation apparatus 110 of the seventh embodiment, the image pattern having removed the speckle noise can be irradiated onto the target object 11.

Further, the transmissive phosphor member 111 is disposed at a position, for example, right before the light tunnel 34 without disposing an optical relay system. Typically, fluorescence emitted from the fluorescent substance has the Lambert distribution, in which the spread angle of light becomes greater, and the light may be leaked outside the light tunnel 34 if the length between the transmissive phosphor member 111 and the light tunnel 34 becomes longer. Therefore, the optical length between the transmissive phosphor member 111 and the light tunnel 34 is set smaller. With employing this configuration for the seventh pattern irradiation apparatus 110, the leak of fluorescence with respect the light tunnel 34 can be prevented. Therefore, the seventh pattern irradiation apparatus 110 can enhance the light transmission efficiency, and can increase the output light power.

Further, the light condenser 32 is used to condense the plurality of laser beams emitted from the light source unit 31 on the transmissive phosphor member 111. Therefore, even if the number of laser diodes 41 in the light source unit 31 is increased, the light emitted from the plurality of laser diodes 41 can be condensed onto the transmissive phosphor member 111 having a smaller size. Therefore, the seventh pattern irradiation apparatus 110 can increase the output light power while setting a smaller size for the fluorescent substance to reduce the cost.

As above described, as to the seventh pattern irradiation apparatus 110 of the seventh embodiment, the speckle noise can be removed from the image pattern, and further the size and cost of the seventh pattern irradiation apparatus 110 can be reduced.

Further, the seventh pattern irradiation apparatus 110 of the seventh embodiment can include the tapered light tunnel 61 of FIG. 9 instead of the light tunnel 34. With this configuration, the seventh pattern irradiation apparatus 110 of the seventh embodiment can attain the same or similar effect of the third embodiment.

Further, the seventh pattern irradiation apparatus 110 of the seventh embodiment can include the prism 71 or the mirror of FIG. 10. Further, the seventh pattern irradiation apparatus 110 of the seventh embodiment can apply the optical configurations of the light condenser 32a indicated in FIGs. 11, 12A, and 12B. With employing these configurations, the seventh pattern irradiation apparatus 110 of the seventh embodiment can attain the same or similar effect of the fourth embodiment.

Further, the seventh pattern irradiation apparatus 110 of the seventh embodiment can apply the optical configurations indicated in FIGs. 13 and 14 instead of the light condenser 32 of the seventh pattern irradiation apparatus 110. With this configuration, the seventh pattern irradiation apparatus 110 of the seventh embodiment can attain the same or similar effect of the fifth embodiment.

Further, the seventh pattern irradiation apparatus 110 of the seventh embodiment can apply the optical configurations indicated in FIGs. 15 and 16 instead of the light condenser 32 of the seventh pattern irradiation apparatus 110. With this configuration, the seventh pattern irradiation apparatus 110 of the seventh embodiment can attain the same or similar effect of the sixth embodiment. As to the seventh embodiment, the seventh pattern irradiation apparatus 110 includes the transmissive phosphor member 111. Since the fluorescent substance emits the light having the Lambert distribution, the spread angle of the light that enters the light tunnel 34 becomes greater compared to the configuration using the laser source as the light source and disposing the diffuser such as the first transmission-type diffuser 33a at the entry side face 45 of the light tunnel 34. However, as described with reference to FIG. 3C, the spread angle of the light at the exit side face 46 of the light tunnel 34 is smaller than the incidence angle of the light at the entry side face 45 of the light tunnel 34. Therefore, as to the seventh embodiment too, by disposing the second transmission-type diffuser 33b at the +x direction side of the light tunnel 34, the damage of optical parts in the irradiation unit 36 can be prevented. This effect can be also attained for the following embodiments using the fluorescent substance.

### (Eighth embodiment)

A description is given of an eighth pattern irradiation apparatus 120 of an eighth embodiment with reference to FIG. 18. The eighth pattern irradiation apparatus 120 of the eighth embodiment has some of the same and similar capabilities and configuration of the seventh pattern irradiation apparatus 110 of the seventh embodiment. Therefore, the same and similar capabilities and configuration are assigned with the same references, and the same and similar capabilities and configuration are not described in detail while the differences are described.

FIG. 18 is a schematic cross-sectional view of a configuration of the eighth pattern irradiation apparatus 120 of the eighth embodiment. The eighth pattern irradiation apparatus 120 includes, for example, the light source unit 31, the light condenser 32, a movable transmissive phosphor member 121, a first driver 122, the light tunnel 34, the second transmission-type diffuser 33b, the image generator 35, and the irradiation unit 36. The eighth pattern irradiation apparatus 120 includes the movable transmissive phosphor member 121 and the first driver 122, which is different from the seventh embodiment using the transmissive phosphor member 111. The first driver 122 employs, for example, a motor.

The movable transmissive phosphor member 121, used as the first diffuser, is a transmissive phosphor member that can change a portion to be irradiated by the light when the plurality of laser beams condensed by the light condenser 32 enters the movable transmissive phosphor member 121. The movable transmissive phosphor member 121 emits fluorescence by using the light that enters the movable transmissive phosphor member 121 as the excitation light. The fluorescence emitted by the movable transmissive phosphor member 121 exits to the light tunnel 34 disposed at an opposite position of the light condenser 32 with respect to the movable transmissive phosphor member 121. The first driver 122 is used to change the portion of the movable transmissive phosphor member 121 to be irradiated by the light. The movable transmissive phosphor member 121, used as the first diffuser, is a transmission-type diffuser.

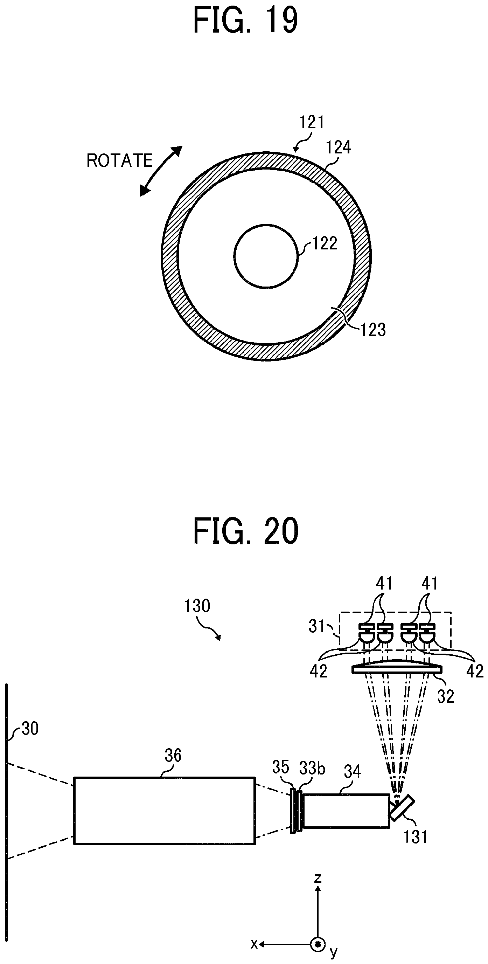

FIG. 19 illustrates an example arrangement of the movable transmissive phosphor member 121 and the first driver 122. The movable transmissive phosphor member 121 includes, for example, a base 123 and a fluorescent substance 124. The base 123 is, for example, a thin circle translucent plate, and rotatable about the center axis. The fluorescent substance 124 is disposed at a peripheral portion of the base 123, in which the fluorescent substance 124 is disposed, for example, as a ring pattern. When the plurality of laser beams condensed by the light condenser 32 enters a portion of the fluorescent substance 124, the fluorescent substance 124 emits fluorescence by using the light that enters the fluorescent substance 124 as the excitation light.

The first driver 122 rotates the movable transmissive phosphor member 121 about the center axis of the base 123. With this configuration, the first driver 122 can change the portion of the fluorescent substance124 (e.g., ring pattern) irradiated by the laser beam condensed by the light condenser 32.

As to the eighth pattern irradiation apparatus 120 of the eighth embodiment, the portion to be irradiated by the light on the movable transmissive phosphor member 121 can be changed by rotating the movable transmissive phosphor member 121 by using the first driver 122. With employing this configuration for the eighth pattern irradiation apparatus 120 of the eighth embodiment, the laser beam may not be irradiated at the same portion the movable transmissive phosphor member 121 for a long period of time, with which the damage of the movable transmissive phosphor member 121 caused by irradiating the laser beam onto the same portion for the long period of time can be prevented.

As to the movable transmissive phosphor member 121, the fluorescent substance 124 such as the ring pattern of fluorescent substance is disposed, but not limited thereto. For example, the fluorescent substance 124 of a long shape can be set on the movable transmissive phosphor member 121, in which the position of the fluorescent substance 124 of the long shape can be moved. Further, the fluorescent substance124 of a polygonal shape or the fluorescent substance 124 of an oval shape can be set on the movable transmissive phosphor member 121. Further, the movable transmissive phosphor member 121 can be, for example, phosphor ceramics instead of the configuration having the base 123 and the fluorescent substance 124.

### (Ninth embodiment)

A description is given of a ninth pattern irradiation apparatus 130 of a ninth embodiment with reference to FIG. 20. The ninth pattern irradiation apparatus 130 of the ninth embodiment has some of the same and similar capabilities and configuration of the seventh pattern irradiation apparatus 110 of the seventh embodiment. Therefore, the same and similar capabilities and configuration are assigned with the same references, and the same and similar capabilities and configuration are not described in detail while the differences are described.

FIG. 20 is a schematic cross-sectional view of a configuration of the ninth pattern irradiation apparatus 130 of the ninth embodiment. The ninth pattern irradiation apparatus 130 includes, for example, the light source unit 31, the light condenser 32, a reflective phosphor member 131, the light tunnel 34, the second transmission-type diffuser 33b, the image generator 35, and the irradiation unit 36. The ninth pattern irradiation apparatus 130 includes the reflective phosphor member 131, which is different from the seventh embodiment using the transmissive phosphor member 111.

The light condenser 32 is used to condense the light emitted from light source unit 31 on the reflective phosphor member 131. As to the ninth embodiment, the light condenser 32 is used to condense the plurality of laser beams onto a substantially one point on the reflective phosphor member 131.

The reflective phosphor member 131, used as the first diffuser, is a reflective phosphor member that emits fluorescence by using the light that enters the reflective phosphor member 131 as the excitation light. When the plurality of laser beams condensed by the light condenser 32 enters the reflective phosphor member 131, the reflective phosphor member 131 emits the fluorescence by using the light that enters the reflective phosphor member 131 as the excitation light. Then, the emitted fluorescence exits from the reflective phosphor member 131 to the light tunnel 34, in which the reflective phosphor member 131 emits the fluorescence at a side where the excitation light enters. The reflective phosphor member 131 emits the fluorescence at the side where the excitation light enters, which is different from the transmissive phosphor member 111, but other capabilities and effect of the reflective phosphor member 131 are same as the transmissive phosphor member 111. The reflective phosphor member 131 is a reflection-type diffuser.

When the fluorescence emitted by the reflective phosphor member 131 enters the light tunnel 34, the fluorescence light having the equalized luminance distribution exits from the light tunnel 34. The exit angle of the light exiting from the light tunnel 34 can be the same as the exit angle of fluorescence emitted from the reflective phosphor member 131.

The reflective phosphor member 131 includes, for example, a reflective base, and a fluorescent substance disposed on the reflective base. The light emitted from light source unit 31 enters a face of the reflective phosphor member 131 disposed with the fluorescent substance.

With this configuration, the reflective phosphor member 131 can reflect the emitted fluorescence into a direction of the light source unit 31.

The reflective base reflects the light having a wavelength range of the laser beam, and the fluorescence light having a wavelength range emitted by the fluorescent substance. A reflection material coating layer such as dielectric multilayer or metal layer can be formed on surface of the reflective base. With this configuration, the reflectance of the reflective base can be increased.

Further, the reflective phosphor member 131 can be, for example, phosphor ceramics. In this configuration, the reflection material coating layer is formed on a face of the reflective phosphor member 131 opposite to the face of the reflective phosphor member 131 where the light enters from the light source unit 31. With this configuration, the reflective phosphor member 131 can reflect the emitted fluorescence to the direction of the light source unit 31. Further, the reflective phosphor member 131 is not limited to the above configuration, but the reflective phosphor member 131 can be formed into any configuration that can emit the fluorescence by using the light emitted from the light source unit 31 as the excitation light, and emits the fluorescence from the face where the excitation light enters

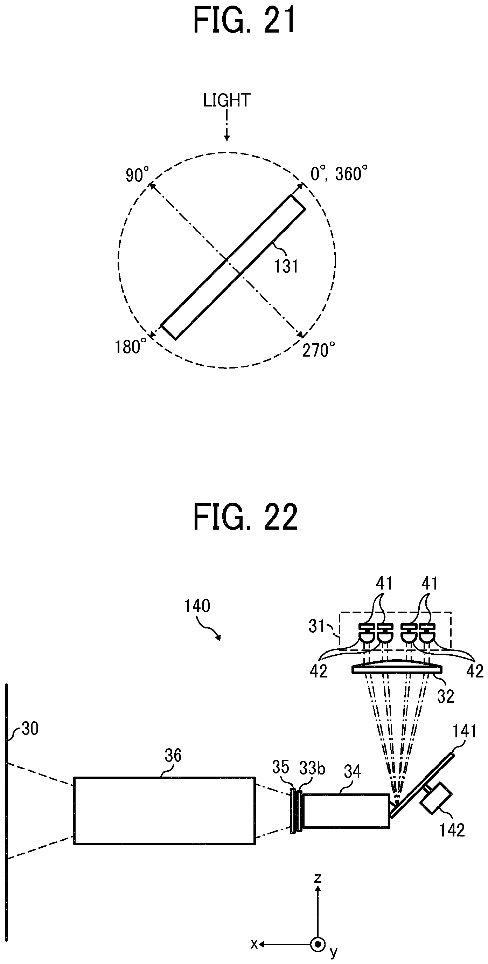

FIG. 21 is a side view of the reflective phosphor member 131. The reflective phosphor member 131 emits the fluorescence by using the laser beam that enters the reflective phosphor member 131 as the excitation light. As indicated in FIG. 21, the direction along the surface of the fluorescent substance is set as 0 degree (or 360 degrees) and 180 degrees. In this configuration, the fluorescence is emitted to directions around the reflective phosphor member 131 such as 360 degrees. For example, the fluorescent substance is disposed with an angle of 45 degrees with respect to the incident direction of the laser beam. Therefore, the fluorescence emitted from the face where the laser beam enters (i.e., range of 0 degree to 180 degrees) is mostly guided to the light tunnel 34.

Further, the fluorescence emitted at a face of the reflective phosphor member 131 (i.e., a range of 180 degrees to 360 degrees), which is opposite to the face where the laser beam enters, is reflected by the reflective base, and is mostly guided to the light tunnel 34.

Further, the excitation light (e.g., laser beam) that enters the florescent substance but is not converted to the fluorescence is also reflected by the reflective base, and then irradiated to the fluorescent substance again, and converted to the fluorescence, and then guided to the light tunnel 34. Therefore, the reflective phosphor member 131 can convert the laser beam to the fluorescence efficiently.

As above described, as to the ninth pattern irradiation apparatus 130 of the ninth embodiment, the speckle noise can be reduced or removed from the image pattern, and further the size and cost of the ninth pattern irradiation apparatus 130 can be reduced.

Further, as to the ninth pattern irradiation apparatus 130 of the ninth embodiment, the higher output light power can be attained. Further, similar to the second embodiment, the ninth pattern irradiation apparatus 130 of the ninth embodiment can devise the light exit prevention system of the laser beam when the reflective phosphor member 131 drops or is damaged with a simpler configuration.

Further, the ninth pattern irradiation apparatus 130 of the ninth embodiment can include the tapered light tunnel 61 of FIG. 9 instead of the light tunnel 34. With this configuration, the ninth pattern irradiation apparatus 130 of the ninth embodiment can have the same or similar effect of the third embodiment.

Further, the ninth pattern irradiation apparatus 130 of the ninth embodiment can include the prism 71 or the mirror of FIG. 10. Further, the ninth pattern irradiation apparatus 130 of the ninth embodiment can use the configurations of the light condenser 32a indicated in FIG. 11, 12A, and FIG. 12B. With employing these configurations, the ninth pattern irradiation apparatus 130 of the ninth embodiment can attain the same or similar effect of the fourth embodiment.

If the light condenser 32 employs the configuration of FIG. 12B, the incident angle of the light condensed on the reflective phosphor member 131 can be set smaller. With this configuration, even if the length between the lens 73 and the reflective phosphor member 131 is set shorter, the light exiting from the lens 73 is not no kicked by the side face of the tapered light tunnel 61 or the reflective phosphor member 131, but can be guided to the surface of the reflective phosphor member 131 effectively and efficiently. Therefore, if the light condenser 32 applies the configuration of FIG. 12B to the ninth pattern irradiation apparatus 130, the length between the lens 73 and the reflective phosphor member 131 can be set shorter, and the ninth pattern irradiation apparatus 130 can be designed compact in size.

Further, when the ninth pattern irradiation apparatus 130 is designed compact in size, the deviation of the excitation light to the reflective phosphor member 131 caused by the tolerance to the irradiation point can be reduced. Therefore, the ninth pattern irradiation apparatus 130 can reduce the emission area size on the reflective phosphor member 131. Therefore, as to the ninth pattern irradiation apparatus 130, the fluorescence can be guided to the tapered light tunnel 61 effectively and efficiently, and the higher output light power can be attained.

Further, the ninth pattern irradiation apparatus 130 of the ninth embodiment can apply the optical configurations indicated in FIGs. 13 and 14 instead of the light condenser 32 of the ninth pattern irradiation apparatus 130. With this configuration, the ninth pattern irradiation apparatus 130 of the ninth embodiment can attain the same or similar effect of the fifth embodiment.

Further, the ninth pattern irradiation apparatus 130 of the ninth embodiment can apply the optical configurations indicated in FIGs. 15 and 16 instead of the light condenser 32 of the ninth pattern irradiation apparatus 130. With this configuration, the ninth pattern irradiation apparatus 130 of the ninth embodiment can attain the same or similar effect of the sixth embodiment.

### (Tenth embodiment)

A description is given of a tenth pattern irradiation apparatus 140 of a tenth embodiment with reference to FIG. 22. The tenth pattern irradiation apparatus 140 of the tenth embodiment has some of the same and similar capabilities and configuration of the ninth pattern irradiation apparatus 130 of the ninth embodiment. Therefore, the same and similar capabilities and configuration are assigned with the same references, and the same and similar capabilities and configuration are not described in detail while the differences are described.

FIG. 22 is a schematic cross-sectional view of a configuration of the tenth pattern irradiation apparatus 140 of the tenth embodiment. The tenth pattern irradiation apparatus 140 includes, for example, the light source unit 31, the light condenser 32, a movable reflective phosphor member 141, a second driver 142, the light tunnel 34, the second transmission-type diffuser 33b, the image generator 35, and the irradiation unit 36. The tenth pattern irradiation apparatus 140 includes the movable reflective phosphor member 141 and the second driver 142, which is different from the ninth embodiment using the reflective phosphor member 131. The second driver 142 employs, for example, a motor.

The movable reflective phosphor member 141, used as the first diffuser, is a reflective phosphor member that can change a portion to be irradiated by the light. When the plurality of laser beams condensed by the light condenser 32 enters the movable reflective phosphor member 141, the movable reflective phosphor member 141 emits fluorescence by using the light that enters the movable reflective phosphor member 141 as the excitation light. The fluorescence emitted by the movable reflective phosphor member 141 exits to the light tunnel 34. The second driver 142 is used to change the portion of the movable reflective phosphor member 141 to be irradiated by the light. The movable reflective phosphor member 141 is a reflection-type diffuser.

The movable reflective phosphor member 141 can use the substantially same configuration of FIG. 19. Specifically, the movable reflective phosphor member 141 includes, for example, the base 123, and the fluorescent substance 124. In this configuration, the base 123 is made of material that reflects the light. For example, a reflection material coating layer such as dielectric multilayer or metal layer can be formed on the surface of the base 123. The fluorescent substance 124 is disposed at a peripheral portion of the base 123, in which the fluorescent substance 124 is disposed with a ring pattern. The light enters the movable reflective phosphor member 141 from one face of the base 123 disposed with the fluorescent substance 124.

As to the movable reflective phosphor member 141, the fluorescent substance 124 such as the ring pattern of fluorescent substance is disposed, but not limited thereto. For example, the fluorescent substance 124 of a long shape can be set on the movable reflective phosphor member 141, in which the position of the fluorescent substance 124 of the long shape can be moved. Further, the fluorescent substance 124 of a polygonal shape or the fluorescent substance124 of an oval shape can be set on the movable reflective phosphor member 141. Further, the movable reflective phosphor member 141 can be, for example, phosphor ceramics instead of the configuration having the base 123 and the fluorescent substance 124. In this configuration, the reflection material coating layer is formed on a face of the movable reflective phosphor member 141, which is opposite to the face of the movable reflective phosphor member 141 where the light enters (i.e., opposite to the light source unit 31 with respect to the movable reflective phosphor member 141).

As to the tenth pattern irradiation apparatus 140 of the tenth embodiment, the portion to be irradiated by the light on the movable reflective phosphor member 141 can be changed by rotating the movable reflective phosphor member 141 by using the second driver 122. With employing this configuration for the tenth pattern irradiation apparatus 140 of the tenth embodiment, the higher output light power can be attained, and the laser beam may not be irradiated at the same portion the movable reflective phosphor member 141 for a long period of time, with which the damage of the movable reflective phosphor member 141 caused by irradiating the laser beam onto the same portion for the long period of time can be prevented.

### (Eleventh embodiment)

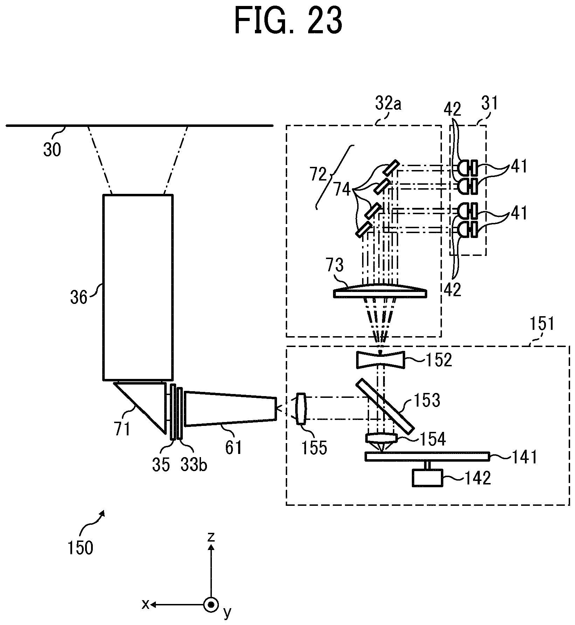

A description is given of an eleventh pattern irradiation apparatus 150 of an eleventh embodiment with reference to FIG. 23. The eleventh pattern irradiation apparatus 150 of the eleventh embodiment has some of the same and similar capabilities and configuration of the fourth pattern irradiation apparatus 70 of the fourth embodiment. Therefore, the same and similar capabilities and configuration are assigned with the same references, and the same and similar capabilities and configuration are not described in detail while the differences are described.

FIG. 23 is a schematic cross-sectional view of a configuration of the eleventh pattern irradiation apparatus 150 of the eleventh embodiment. The eleventh pattern irradiation apparatus 150 includes, for example, the light source unit 31, the light condenser 32a, a reflective phosphor unit 151, the tapered light tunnel 61, the second transmission-type diffuser 33b, the image generator 35, the prism 71, and the irradiation unit 36. The eleventh pattern irradiation apparatus 150 includes the reflective phosphor unit 151, which is different from the fourth embodiment using the reflection-type diffuser 51.

The reflective phosphor unit 151 is an optical system including a reflective phosphor member that emits fluorescence by using the light that enters the reflective phosphor unit 151 as the excitation light. When the plurality of laser beams condensed by the light condenser 32a enters the reflective phosphor unit 151, the reflective phosphor unit 151 emits the fluorescence by using the light that enters the reflective phosphor unit 151 as the excitation light. Then, the fluorescence emitted by the reflective phosphor unit 151 exits to the tapered light tunnel 61. As to the reflective phosphor unit 151, the light axis of the laser beam coming from the light condenser 32a to the reflective phosphor unit 151 and the light axis of the fluorescence exiting to the tapered light tunnel 61 from the reflective phosphor unit 151 are set substantially perpendicular with each other.

The reflective phosphor unit 151 includes, for example, the movable reflective phosphor member 141, the second driver 142, a concave lens 152, a dichroic mirror 153, a first condensing lens 154, and a second condensing lens 155.

The eleventh pattern irradiation apparatus 150 includes the movable reflective phosphor member 141 and the second driver 142 same as the tenth embodiment. The movable reflective phosphor member 141 is a reflective phosphor member that can change a portion to be irradiated by the light. Further, the second driver 142 is used to change the portion of the movable reflective phosphor member 141 to be irradiated by the light. As to the eleventh pattern irradiation apparatus 150, the movable reflective phosphor member 141 emits the fluorescence along a direction that the excitation light enters, in which the excitation light comes to the movable reflective phosphor member 141 along the -z direction, and the movable reflective phosphor member 141 emits the fluorescence along the +z direction.

When the plurality of laser beams condensed by the light condenser 32a enters the concave lens 152, the plurality of laser beams is changed substantially parallel light fluxes by the concave lens 152, and exits from the concave lens 152. The parallel light fluxes exiting from the concave lens 152 enters the dichroic mirror 153.

The dichroic mirror 153 passes through the light having a wavelength range of the laser beam emitted from the light source unit 31, and reflects the light having a wavelength range of the fluorescence emitted by the movable reflective phosphor member 141. For example, if the laser beam is blue light, and the fluorescence is yellow light, the dichroic mirror 153 passes through the light having the wavelength range of blue light, and reflects the light having the wavelength range of yellow light.

When the substantially parallel light fluxes such as the laser beams exit from the concave lens 152, the substantially parallel light fluxes such as the laser beam enter the dichroic mirror 153. Then, the substantially parallel light fluxes, exit from the concave lens 152, passes through the dichroic mirror 153

After the substantially parallel light fluxes such as the laser beams exit from the concave lens 152 and passes through the dichroic mirror 153, the substantially parallel light fluxes such as the laser beams enter the first condensing lens 154. The first condensing lens 154 is used to condense the laser beams on the movable reflective phosphor member 141.

The movable reflective phosphor member 141 emits fluorescence by using the laser beams condensed by the first condensing lens 154 as the excitation light. The fluorescence emitted by the movable reflective phosphor member 141 returns to the same light path of the incident light to the movable reflective phosphor member 141, passes through the first condensing lens 154, and then enters the dichroic mirror 153.

The dichroic mirror 153 reflects the fluorescence emitted by the movable reflective phosphor member 141 to the second condensing lens 155. The second condensing lens 155 is used to condense the fluorescence coming from the dichroic mirror 153 to the entry side face 64 of the tapered light tunnel 61. Then, the fluorescence that passes through the tapered light tunnel 61 is irradiated on the projection face 30 via the image generator 35, the prism 71 and the irradiation unit 36.

As to the eleventh pattern irradiation apparatus 150 of the eleventh embodiment, since the laser beam enters the fluorescent substance 124 on the movable reflective phosphor member 141 from a direction perpendicular to the face of the movable reflective phosphor member 141, a beam spot formed on the fluorescent substance 124 on the movable reflective phosphor member 141 can be set smaller. Therefore, the first condensing lens 154 can acquire the fluorescence having the substantially Lambert distribution efficiently, and the higher output light power can be attained.

Further, the eleventh pattern irradiation apparatus 150 of the eleventh embodiment can include, for example, the reflective phosphor member 131 used for the ninth embodiment instead of the movable reflective phosphor member 141.

As above described, the eleventh pattern irradiation apparatus 150 includes the concave lens 152 and the first condensing lens 154 to set the light that enters the dichroic mirror 153 as substantially parallel light fluxes to enhance the light transmission efficiency. However, the eleventh pattern irradiation apparatus 150 can be configured without using the concave lens 152 and the first condensing lens 154. For example, the light condenser 32a can be used to condense the laser beam on the movable reflective phosphor member 141, in which the dichroic mirror 153 is disposed at a position between the light condenser 32a and the movable reflective phosphor member 141.

Further, the eleventh pattern irradiation apparatus 150 of the eleventh embodiment can apply the optical configurations indicated in FIGs. 13 and 14 instead of the light condenser 32a of the eleventh pattern irradiation apparatus 150. With this configuration, the eleventh pattern irradiation apparatus 150 of the eleventh embodiment can attain the same or similar effect of the fifth embodiment.

Further, the eleventh pattern irradiation apparatus 150 of the eleventh embodiment can apply the optical configurations indicated in FIGs. 15 and 16 instead of the light condenser 32a of the eleventh pattern irradiation apparatus 150. With this configuration, the eleventh pattern irradiation apparatus 150 of the eleventh embodiment can attain the same or similar effect of the sixth embodiment.

As to the above described embodiments, the light having the equalized luminance density can be irradiated on a projection face, and the luminance density of the light irradiated to the irradiation unit can be reduced, with which damage to optical parts can be suppressed, in particular prevented.

Numerous additional modifications and variations are possible in light of the above teachings. It is therefore to be understood that, within the scope of the appended claims, the disclosure of the present disclosure may be practiced otherwise than as specifically described herein. For example, elements and/or features of different examples and illustrative embodiments may be combined with each other and/or substituted for each other within the scope of the invention as defined in the appended claims.

## Claims

1. A system (10) comprising:
a pattern irradiation apparatus (20, 50, 60, 70, 80, 90, 110, 120, 130, 140, 150) comprising:
an irradiation apparatus (31, 32, 33, 34) comprising:
a light source unit (31) to emit light; and
a first diffuser (33a, 51, 111, 121, 131, 141); the pattern irradiation apparatus further comprising
an image generator (35), disposed on a light path of the light exiting from the irradiation apparatus (31, 32, 33, 34), to pass through the light exiting from the irradiation apparatus (31, 32, 33, 34) by applying a given image pattern to the light; and
an irradiation unit (36), disposed on a light path of the light exiting from the image generator (35), to irradiate the light having the given image pattern that has passed through the image generator (35) to a target object; the system further comprising
a three-dimensional measuring apparatus (21) to measure a distance to the target object being irradiated with the light by using the pattern irradiation apparatus (20, 50, 60, 70, 80, 90, 110, 120, 130, 140, 150) in order to enhance the precision of the distance measurement;
**characterised in that** the irradiation apparatus further comprises:
a light condenser (32, 32a, 32b, 32c), disposed on a light path of the light emitted from the light source unit (31), to condense the light emitted from the light source unit (31), wherein the first diffuser (33a, 51, 111, 121, 131,141) is disposed on a light path of the light exiting from the light condenser (32, 32a, 32b, 32c), to diffuse the light condensed by the light condenser (32, 32a, 32b, 32c);
an optical equalizer (34, 61), disposed downstream of the first diffuser (33a, 51, 111, 121, 131,141), to equalize a luminance distribution of the light entering the optical equalizer (34, 61) from the first diffuser (33a, 51, 111, 121, 131,141) and to output the light having the equalized luminance distribution; and
a second diffuser (33b), disposed downstream of the optical equalizer (34, 61), to diffuse the light exiting from the optical equalizer (34, 61).

2. The system of claim 1, wherein the first diffuser (111, 121, 131,141) is a phosphor member (111, 121, 131, 141) including a fluorescent substance (124) that emits fluorescence when the light condensed by the light condenser (32, 32a, 32b, 32c) hits the fluorescent substance (124) as an excitation light.

3. The system of claim 2, further comprising a driver (122, 142) to rotate the phosphor member (121, 131, 141) including the fluorescent substance (124) to change a portion of the fluorescent substance (124) irradiated by the light condensed by the light condenser (32, 32a, 32b, 32c).

4. The system of claim 1, wherein the first diffuser (3 3 a, 111, 121) is a transmission-type diffuser.

5. The system of claim 1, wherein the first diffuser (51, 131, 141) is a reflection-type diffuser.

6. The system of claim 5, wherein the reflection-type diffuser (51) includes
a transmissive diffusion face (52) formed at one side of the reflection-type diffuser (51) facing the light source unit (31), and
a reflection face (53) formed at another side of the reflection-type diffuser (51), opposite to the one side of the reflection-type diffuser (51) facing the light source unit (31).

7. The system of any one of claims 1 to 6, wherein the light source unit (31) includes a plurality of light sources (41) that emit a plurality of light fluxes in the same direction.

8. The system of claim 7, wherein each of the light sources (41) is a laser diode.

9. The system of claim 8, wherein each of the light sources (41) is a blue laser diode.

10. The system of any one of claims 1 to 9, wherein the optical equalizer (34, 61) is a light tunnel having an entry side face (45, 64), an exit side face (46, 65), an internal reflection face (43, 62), and an internal space (44, 63) surrounded by the internal reflection face (43, 62),
wherein the light enters the internal space (44, 63) from the entry side face (45, 64), passes through the internal space (44, 63) while reflecting on the internal reflection face (43, 62), and exits from the exit side face (46, 65).

11. The system of claim 10, wherein the exit side face (65) of the light tunnel (61) is greater in dimension than the entry side face (64) of the light tunnel (61), and the internal reflection face (62) is angled with respect to a central axis of the optical equalizer (61).

12. The system of claims 1 to 11, wherein the light condenser (32a, 32b, 32c) includes
a mirror unit (72, 81, 91) including a plurality of mirrors, each disposed on the light path of the light emitted from the light source unit (31), to reflect a plurality of light fluxes emitted from the light source unit (31) by the plurality of mirrors; and
a lens (73, 82), disposed on a light path of the light reflected from the mirror unit (72, 81, 91), to condense the plurality of light fluxes reflected by the mirror unit (72, 81,91),
wherein the mirror unit (72, 81, 91) reflects the plurality of light fluxes emitted from the light source unit (31) to the lens (73, 82), while causing a light flux width of the plurality of light fluxes reflected by the mirror unit (72, 81, 91) to be smaller than a light flux width of the plurality of light fluxes emitted from the light source unit (31).

13. The system (10) of any one of claims 1 to 12, further comprising:
a robot (13) to handle the target object;
a recognition apparatus (22) configured to recognize a position and a posture of the target object based on the distance to the target object measured by the three-dimensional measuring apparatus (21); and
a robot controller (23) configured to control a handling operation of the robot (13) based on information of the position and the posture of the target object recognized by the recognition apparatus (22).

## Patentansprüche

1. System (10), umfassend:
eine Musterbestrahlungsvorrichtung (20, 50, 60, 70, 80, 90, 110, 120, 130, 140, 150), umfassend:
eine Bestrahlungsvorrichtung (31, 32, 33, 34), umfassend:
eine Lichtquelleneinheit (31) zum Abgeben von Licht; und
einen ersten Verteiler (33a, 51, 111, 121, 131, 141);
die Musterbestrahlungsvorrichtung ferner umfassend:
einen Bilderzeuger (35), angeordnet auf einem Lichtpfad des von der Bestrahlungsvorrichtung (31, 32, 33, 34) austretenden Lichts, um durch das Verwenden eines gegebenen Bildmusters für das Licht durch das von der Bestrahlungsvorrichtung (31, 32, 33, 34) austretende Licht zu verlaufen; und
eine Bestrahlungseinheit (36), angeordnet auf einem des von dem Bilderzeuger (35) austretenden Lichts, um das Licht mit dem gegebenen Bildmuster zu bestrahlen, das durch den Bilderzeuger (35) zu einem Zielobjekt verlaufen ist; das System ferner umfassend:
eine dreidimensionale Messvorrichtung (21) zum Messen einer Distanz zu dem Zielobjekt, das mit dem Licht durch die Musterbestrahlungsvorrichtung (20, 50, 60, 70, 80, 90, 110, 120, 130, 140, 150) bestrahlt wird, um die Präzision der Distanzmessung zu verbessern;
**dadurch gekennzeichnet, dass** die Bestrahlungsvorrichtung ferner Folgendes umfasst:
einen Lichtkondensor (32, 32a, 32b, 32c), angeordnet auf einem Lichtpfad des von der Lichtquelleneinheit (31) abgegebenen Lichts, um das von der Lichtquelleneinheit (31) abgegebene Licht zu konzentrieren, wobei der erste Verteiler (33a, 51, 111, 121, 131, 141) auf einem Lichtpfad des von dem Lichtkondensor (32, 32a, 32b, 32c) austretenden Lichts angeordnet ist, um das von dem Lichtkondensor (32, 32a, 32b, 32c) konzentrierte Licht zu verteilen;
einen optischen Entzerrer (34, 61), angeordnet stromabwärts des ersten Verteilers (33a, 51, 111, 121, 131, 141), um eine Leuchtdichteverteilung des Lichts auszugleichen, das in den optischen Entzerrer (34, 61) von dem ersten Verteiler (33a, 51, 111, 121, 131, 141) eintritt, und um das Licht mit der ausgeglichenen Leuchtdichteverteilung abzugeben; und
einen zweiten Verteiler (33b), angeordnet stromabwärts des optischen Entzerrers (34, 61), um das von dem optischen Entzerrer (34, 61) austretende Licht zu verteilen.

2. System nach Anspruch 1, wobei der erste Verteiler (111, 121, 131, 141) ein Phosphorelement (111, 121, 131, 141) ist, das eine Fluoreszenzsubstanz (124) umfasst, die eine Fluoreszenz abgibt, wenn das durch den Lichtkondensor (32, 32a, 32b, 32c) konzentrierte Licht auf die Fluoreszenzsubstanz (124) als ein Anregungslicht trifft.

3. System nach Anspruch 2, ferner umfassend einen Treiber (122, 142) zum Drehen des Phosphorelements (121, 131, 141), das die Fluoreszenzsubstanz (124) umfasst, um einen Anteil der Fluoreszenzsubstanz (124) zu verändern, die von dem durch den Lichtkondensor (32, 32a, 32b, 32c) konzentrierten Licht bestrahlt wird.

4. System nach Anspruch 1, wobei der erste Verteiler (3 3 a, 111, 121) ein Verteiler vom Transmissionstyp ist.

5. System nach Anspruch 1, wobei der erste Verteiler (51, 131, 141) ein Verteiler vom Reflektionstyp ist.

6. System nach Anspruch 5, wobei der Verteiler vom Reflektionstyp (51) Folgendes umfasst:
eine durchlässige Verteilungsfläche (52), gebildet an einer Seite des Verteilers vom Reflektionstyp (51), die der Lichtquelleneinheit (31) zugewandt ist, und
eine Reflektionsfläche (53), gebildet an einer anderen Seite des Verteilers vom Reflektionstyp (51), gegenüber der Seite des Verteilers vom Reflektionstyp (51), die der Lichtquelleneinheit (31) zugewandt ist.

7. System nach einem der vorstehenden Ansprüche 1 bis 6, wobei die Lichtquelleneinheit (31) eine Vielzahl von Lichtquellen (41) umfasst, die eine Vielzahl von Lichtströmen in dieselbe Richtung abgeben.

8. System nach Anspruch 7, wobei jede der Lichtquellen (41) eine Laser-Diode ist.

9. System nach Anspruch 8, wobei jede der Lichtquellen (41) eine blaue Laser-Diode ist.

10. System nach einem der Ansprüche 1 bis 9, wobei der optische Entzerrer (34, 61) ein Lichttunnel mit einer Eingangsseitenfläche (45, 64), einer Ausgangsseitenfläche (46, 65), einer inneren Reflektionsfläche (43, 62) und einem Innenraum (44, 63), umgeben von der inneren Reflektionsfläche (43, 62), ist,
wobei das Licht von der Eingangsseitenfläche (45, 64) in den Innenraum (44, 63) eintritt, durch den Innenraum (44, 63) verläuft, während es auf der inneren Reflektionsfläche (43, 62) reflektiert wird, und von der Ausgangsseitenfläche (46, 65) austritt.

11. System nach Anspruch 10, wobei die Ausgangsseitenfläche (65) des Lichttunnels (61) größer in Bezug auf die Abmessung ist als die Eingangsseitenfläche (64) des Lichttunnels (61) und die innere Reflektionsfläche (62) mit Bezug auf eine zentrale Achse des optischen Entzerrers (61) geneigt ist.

12. System nach den Ansprüchen 1 bis 11, wobei der Lichtkondensor (32a, 32b, 32c) Folgendes umfasst:
eine Spiegeleinheit (72, 81, 91), umfassend eine Vielzahl von Spiegeln, jeweils angeordnet auf dem Lichtpfad des von der Lichtquelleneinheit (31) abgegebenen Lichts, um eine Vielzahl von Lichtströmen zu reflektieren, die von der Lichtquelleneinheit (31) durch die Vielzahl von Spiegeln abgegeben wird; und
eine Linse (73, 82), angeordnet auf einem Lichtpfad des von der Spiegeleinheit (72, 81, 91) reflektierten Lichts, um die Vielzahl von Lichtströmen zu konzentrieren, die von der Spiegeleinheit (72, 81, 91) reflektiert wird,
wobei die Spiegeleinheit (72, 81, 91) die Vielzahl von Lichtströmen reflektiert, die von der Lichtquelleneinheit (31) zu der Linse (73, 82) abgegeben wird, während bewirkt wird, dass eine Lichtstrombreite der Vielzahl von durch die Spiegeleinheit (72, 81, 91) reflektierten Lichtströme kleiner ist als eine Lichtstrombreite der Vielzahl von durch die Lichtquelleneinheit (31) abgegebenen Lichtströme.

13. System (10) nach einem der Ansprüche 1 bis 12, ferner umfassend:
einen Roboter (13) zum Handhaben des Zielobjekts;
eine Erkennungsvorrichtung (22), die konfiguriert ist, eine Position und eine Haltung des Zielobjekts beruhend auf der durch die dreidimensionale Messvorrichtung (21) gemessenen Distanz zu dem Zielobjekt zu erkennen; und
eine Robotersteuerungsvorrichtung (23), die konfiguriert ist, einen Handhabungsbetrieb des Roboters (13) beruhend auf einer Information der durch die Erkennungsvorrichtung (22) erkannten Position und Haltung des Zielobjekts zu steuern.

## Revendications

1. Système (10), comprenant :
un appareil d'irradiation d'un motif (20, 50, 60, 70, 80, 90, 110, 120, 130, 140, 150), comprenant :
un appareil d'irradiation (31, 32, 33, 34) comprenant :
une unité source de lumière (31) pour émettre de la lumière ; et
un premier diffuseur (33a, 51, 111, 121, 131, 141) ; l'appareil d'irradiation d'un motif comprenant en outre :
un générateur d'images (35), disposé sur une trajectoire de lumière de la lumière sortant de l'appareil d'irradiation (31, 32, 33, 34), pour passer au travers de la lumière sortant de l'appareil d'irradiation (31, 32, 33, 34) par application d'un motif d'image donné à la lumière ; et
une unité d'irradiation (36), disposée sur une trajectoire de lumière de la lumière sortant du générateur d'images (35), pour irradier la lumière ayant le motif d'image donné qui est passée au travers du générateur d'images (35) sur un objet cible ; le système comprenant en outre :
un appareil de mesure tridimensionnel (21) pour mesurer une distance de l'objet cible qui est irradié avec la lumière par l'appareil d'irradiation de motif (20, 50, 60, 70, 80, 90, 110, 120, 130, 140, 150) afin d'augmenter la précision de la mesure de distance ;
**caractérisé en ce que** l'appareil d'irradiation comprend en outre :
un condensateur de lumière (32, 32a, 32b, 32c), disposé sur une trajectoire de lumière de la lumière émise par l'unité source de lumière (31), pour condenser la lumière émise par l'unité source de lumière (31), le premier diffuseur (33a, 51, 111, 121, 131,141) étant disposé sur une trajectoire de lumière de la lumière sortant du condensateur de lumière (32, 32a, 32b, 32c), pour diffuser la lumière condensée par le condensateur de lumière (32, 32a, 32b, 32c) ;
un égalisateur optique (34, 61), disposé en aval du premier diffuseur (33a, 51, 111, 121, 131, 141), pour égaliser une distribution de luminance de la lumière entrant dans l'égalisateur optique (34, 61) depuis le premier diffuseur (33a, 51, 111, 121, 131, 141) et pour émettre la lumière ayant la distribution de luminance égalisée ; et
un deuxième diffuseur (33b), disposé en aval de l'égalisateur optique (34, 61), pour diffuser la lumière sortant de l'égalisateur optique (34, 61).

2. Système selon la revendication 1, dans lequel le premier diffuseur (111, 121, 131, 141) est un élément phosphore (111, 121, 131, 141) comprenant une substance fluorescente (124) qui émet de la fluorescence lorsque la lumière condensée par le condensateur de lumière (32, 32a, 32b, 32c) atteint la substance fluorescente (124) en tant que lumière d'excitation.

3. Système selon la revendication 2, comprenant en outre un dispositif d'entraînement (122, 142) pour faire tourner l'élément phosphore (121, 131, 141) comprenant la substance fluorescente (124) pour changer une partie de la substance fluorescente (124) irradiée par la lumière condensée par le condensateur de lumière (32, 32a, 32b, 32c).

4. Système selon la revendication 1, dans lequel le premier diffuseur (33a, 111, 121) est un diffuseur de type transmission.

5. Système selon la revendication 1, dans lequel le premier diffuseur (51, 131, 141) est un diffuseur de type réflexion.

6. Système selon la revendication 5, dans lequel le diffuseur de type réflexion (51) comprend en outre :
une face de diffusion transmissive (52) formée sur un côté du diffuseur de type réflexion (51) orienté vers l'unité source de lumière (31), et
une face de réflexion (53) formée sur un autre côté du diffuseur de type réflexion (51), opposé au côté du diffuseur de type réflexion (51) orienté vers l'unité source de lumière (31).

7. Système selon l'une quelconque des revendications 1 à 6, dans lequel l'unité source de lumière (31) comprend une pluralité de sources de lumière (41) qui émettent une pluralité de flux lumineux dans la même direction.

8. Système selon la revendication 7, dans lequel chacune des sources de lumière (41) est une diode laser.

9. Système selon la revendication 8, dans lequel chacune des sources de lumière (41) est une diode laser bleue.

10. Système selon l'une quelconque des revendications 1 à 9, dans lequel l'égalisateur optique (34, 61) est un tunnel de lumière ayant une face de côté d'entrée (45, 64), une face de côté de sortie (46, 65), une face de réflexion interne (43, 62), et un espace interne (44, 63) entouré par la face de réflexion interne (43, 62),
la lumière entrant dans l'espace interne (44, 63) depuis la face de côté d'entrée (45, 64), traversant l'espace intérieur (44, 63) tout en se réfléchissant sur la face de réflexion interne (43, 62), et sortant par la face de côté de sortie (46, 65).

11. Système selon la revendication 10, dans lequel la face de côté de sortie (65) du tunnel de lumière (61) est de dimensions plus grandes que la face de côté d'entrée (64) du tunnel de lumière (61), et la face de réflexion interne (62) est à un angle par rapport à un axe central de l'égalisateur optique (61).

12. Système selon les revendications 1 à 11, dans lequel le condensateur de lumière (32a, 32b, 32c) comprend :
une unité de miroir (72, 81, 91) comprenant une pluralité de miroirs, chacun disposé sur la trajectoire de lumière de la lumière émise par l'unité source de lumière (31), pour réfléchir une pluralité de flux lumineux émis par l'unité source de lumière (31) par la pluralité de miroirs ; et
une lentille (73, 82), disposée sur une trajectoire de lumière de la lumière réfléchie par l'unité de miroir (72, 81, 91), pour condenser la pluralité de flux lumineux réfléchis par l'unité de miroir (72, 81, 91),
l'unité de miroir (72, 81, 91) réfléchissant la pluralité de flux lumineux émis par l'unité source de lumière (31) vers la lentille (73, 82), tout en amenant une largeur de flux lumineux de la pluralité de flux lumineux réfléchis par l'unité de miroir (72, 81, 91) à être plus petite qu'une largeur de flux lumineux de la pluralité de flux lumineux émis par l'unité source de lumière (31).

13. Système (10) selon l'une quelconque des revendications 1 à 12, comprenant en outre :
un robot (13) pour manipuler l'objet cible ;
un appareil de reconnaissance (22) configuré pour reconnaître une position et une posture de l'objet cible à partir de la distance de l'objet cible mesurée par l'appareil de mesure tridimensionnelle (21) ; et
un contrôleur de robot (23) configuré pour contrôler une opération de manipulation du robot (13) à partir d'informations sur la position et la posture de l'objet cible reconnues par l'appareil de reconnaissance (22).
